# EUROPEAN PATENT APPLICATION

(11) **EP 4 456 636 A1**
(43) Date of publication of application: **30.10.2024**
(21) Application number: 22910194.4
(22) Date of filing: 23.12.2022
(51) Int. Cl.: H04W 72/04

(54) **METHOD AND APPARATUS FOR DETERMINING TIME-FREQUENCY RESOURCE FOR MSG1 REPEAT TRANSMISSION, AND TERMINAL**

(30) Priority: 24.12.2021 CN 202111602745
(71) Applicant: VIVO MOBILE COMMUNICATION CO., LTD., Dongguan, Guangdong 523863 (CN)
(72) Inventor: YANG, Kun, Dongguan, Guangdong 523863 (CN); WU, Kai, Dongguan, Guangdong 523863 (CN); PAN, Xueming, Dongguan, Guangdong 523863 (CN)
(74) Representative: Murgitroyd & Company
(86) International application number: PCT/CN2022/141420
(87) International publication number: WO 2023/116883

(57) **Abstract**

This application discloses a method and apparatus for determining a time-frequency resource for Msg1 repeated-transmission and a terminal and belongs to the field of communication technologies. According to embodiments of this application, the method for determining a time-frequency resource for Msg1 repeated-transmission includes: receiving, by a terminal, a first message sent by a network-side device, where the first message carries first configuration information of Msg1 repeated-transmission; determining, by the terminal, a first time-frequency resource for the Msg1 repeated-transmission based on the first configuration information, where the determining a first time-frequency resource for the Msg1 repeated-transmission includes at least one of the following: determining whether to perform the Msg1 repeated-transmission; determining a physical random access channel PRACH resource for the Msg1 repeated-transmission; and determining a frequency hopping parameter of the Msg 1 repeated-transmission.

## Description

### CROSS-REFERENCE TO RELATED APPLICATIONS

This application claims priority to Chinese Patent Application No. 202111602745.1, filed on December 24, 2021 and entitled "METHOD AND APPARATUS FOR DETERMINING TIME-FREQUENCY RESOURCE FOR MSG1 REPEATED-TRANSMISSION AND TERMINAL", which is incorporated herein by reference in its entirety.

### TECHNICAL FIELD

This application relates to the field of communication technologies, and specifically, to a method and apparatus for determining a time-frequency resource for Msg1 repeated-transmission and a terminal.

### BACKGROUND

The NR supports two types of random access procedures: a 4-step RA type (4-step RACH) of Msg1 and a 2-step RA type (2-step RACH) of MsgA. Both types of RA procedures support contention-based random access (Contention based RA, CBRA) and contention-free random access (Contention free RA, CFRA). The 2-step RACH procedure is generally applied to a region with good coverage, to shorten an access time of a terminal. In a region with poor signal coverage, a terminal should access a cell using the 4-step RACH procedure.

In the related art, Msg1 is always transmitted in a single transmission, and after Msg1 is transmitted, a random access response (Random Access Response, RAR) monitoring window is started. Msg1 single-transmission has limited coverage performance. There may be a problem that an Msg1 detection success rate is low on an edge of a cell, which affects access of a terminal on the edge of the cell to the cell. Msg1 repeated-transmission is a method for improving coverage performance of a physical random access channel (Physical random-access channel, PRACH). However, how to implement the Msg1 repeated-transmission needs to be resolved.

### SUMMARY

Embodiments of this application provide a method and apparatus for determining a time-frequency resource for Msg1 repeated-transmission and a terminal, to resolve a problem of how to implement Msg1 repeated-transmission.

According to a first aspect, a method for determining a time-frequency resource for Msg1 repeated-transmission is provided and is applied to a terminal. The method includes:
receiving, by a terminal, a first message sent by a network-side device, where the first message carries first configuration information of Msg1 repeated-transmission; and
determining, by the terminal, a first time-frequency resource for the Msg1 repeated-transmission based on the first configuration information, where
the determining a first time-frequency resource for the Msg1 repeated-transmission includes at least one of the following:
   determining whether to perform the Msg1 repeated-transmission;
   determining a physical random access channel PRACH resource for the Msg1 repeated-transmission; and
   determining a frequency hopping parameter of the Msg 1 repeated-transmission.

According to a second aspect, a method for determining a time-frequency resource for Msg1 repeated-transmission is provided and is applied to a network-side device. The method includes:
sending, by a network-side device, a first message to a terminal, where the first message carries first configuration information of Msg1 repeated-transmission.

According to a third aspect, an apparatus for determining a time-frequency resource for Msg1 repeated-transmission is provided, including:
a first receiving unit, configured to receive a first message sent by a network-side device, where the first message carries first configuration information of Msg1 repeated-transmission; and
a first determining unit, configured to determine a first time-frequency resource for the Msg1 repeated-transmission based on the first configuration information, where
the determining a first time-frequency resource for the Msg1 repeated-transmission includes at least one of the following:
   determining whether to perform the Msg1 repeated-transmission;
   determining a physical random access channel PRACH resource for the Msg1 repeated-transmission; and
   determining a frequency hopping parameter of the Msg 1 repeated-transmission.

According to a fourth aspect, an apparatus for determining a time-frequency resource for Msg1 repeated-transmission is provided, including:
a first sending unit, configured to send a first message to a terminal, where the first message carries first configuration information of Msg1 repeated-transmission.

According to a fifth aspect, a terminal is provided. The terminal includes a processor and a memory. The memory has a program or instructions executable by the processor stored therein. When executed by the processor, the program or instructions implement the steps of the method for determining a time-frequency resource for Msg1 repeated-transmission according to the first aspect.

According to a sixth aspect, a terminal is provided, including a processor and a communication interface. The communication interface is configured to receive a first message sent by a network-side device. The first message carries first configuration information of Msg1 repeated-transmission. The processor is configured to determine a first time-frequency resource for the Msg1 repeated-transmission based on the first configuration information. The determining a first time-frequency resource for the Msg1 repeated-transmission includes at least one of the following: determining whether to perform the Msg1 repeated-transmission; determining a physical random access channel PRACH resource for the Msg1 repeated-transmission; and determining a frequency hopping parameter of the Msg1 repeated-transmission.

According to a seventh aspect, a network-side device is provided. The network-side device includes a processor and a memory. The memory has a program or instructions executable by the processor stored therein. When executed by the processor, the program or instructions implement the steps of the method for determining a time-frequency resource for Msg1 repeated-transmission according to the second aspect.

According to an eighth aspect a network-side device is provided, including a processor and a communication interface. The communication interface is configured to send a first message to a terminal. The first message carries first configuration information of Msg1 repeated-transmission.

According to a ninth aspect, a system for determining a time-frequency resource for Msg1 repeated-transmission is provided, including a terminal and a network-side device. The terminal may be configured to perform the steps of the method for determining a time-frequency resource for Msg1 repeated-transmission according to the first aspect. The network-side device may be configured to perform the steps of the method for determining a time-frequency resource for Msg1 repeated-transmission according to the second aspect.

According to a tenth aspect, a readable storage medium is provided. The readable storage medium has a program or instructions stored therein. When executed by the processor, the program or instructions implement the steps of the method for determining a time-frequency resource for Msg1 repeated-transmission according to the first aspect or implement the steps of the method for determining a time-frequency resource for Msg1 repeated-transmission according to the second aspect.

According to an eleventh aspect, a chip is provided. The chip includes a processor and a communication interface. The communication interface is coupled to the processor. The processor is configured to run a program or instructions, to implement the steps of the method for determining a time-frequency resource for Msg1 repeated-transmission according to the first aspect or implement the steps of the method for determining a time-frequency resource for Msg1 repeated-transmission according to the second aspect.

According to a twelfth aspect, a computer program/program product is provided. The computer program/program product is stored in a storage medium. The computer program/program product is executed by at least one processor to implement the steps of the method for determining a time-frequency resource for Msg1 repeated-transmission according to the first aspect or implement the steps of the method for determining a time-frequency resource for Msg1 repeated-transmission according to the second aspect.

In embodiments of this application, the terminal determines the first time-frequency resource for the Msg1 repeated-transmission based on the first configuration information of the Msg1 repeated-transmission sent by the network-side device, to implement the Msg1 repeated-transmission, thereby improving coverage performance of a PRACH.

### BRIEF DESCRIPTION OF THE DRAWINGS

FIG. 1 is a block diagram of a wireless communication system to which an embodiment of this application is applicable;
FIG. 2 is a schematic flowchart 1 of a method for determining a time-frequency resource for Msg1 repeated-transmission according to an embodiment of this application;
FIG. 3 is an example diagram of determining a time domain position of a RO of Msg1 repeated-transmission associated with a same SSB according to an embodiment of this application;
FIG. 4 is an example diagram of determining a time domain position of a RO of Msg1 repeated-transmission associated with different SSBs according to an embodiment of this application;
FIG. 5 is a schematic diagram 1 of RO frequency hopping according to an embodiment of this application;
FIG. 6 is a schematic diagram 2 of RO frequency hopping according to an embodiment of this application;
FIG. 7 is a schematic flowchart 2 of a method for determining a time-frequency resource for Msg1 repeated-transmission according to an embodiment of this application;
FIG. 8 is a schematic structural diagram 1 of an apparatus for determining a time-frequency resource for Msg1 repeated-transmission according to an embodiment of this application;
FIG. 9 is a schematic structural diagram 2 of an apparatus for determining a time-frequency resource for Msg1 repeated-transmission according to an embodiment of this application;
FIG. 10 is a schematic structural diagram of a communication device according to an embodiment of this application;
FIG. 11 is a schematic diagram of a hardware structure of a terminal implementing an embodiment of this application; and
FIG. 12 is a schematic structural diagram of a network-side device according to an embodiment of this application.

### DETAILED DESCRIPTION

The following clearly describes the technical solutions in embodiments of this application with reference to the accompanying drawings in embodiments of this application. Apparently, the described embodiments are some rather than all of embodiments of this application. All other embodiments obtained by a person of ordinary skill in the art based on embodiments of this application fall within the protection scope of this application.

In the specification and claims of this application, terms "first" and "second" are used to distinguish similar objects, but are not used to describe a specific sequence or order. It should be understood that, the terms used in this way are exchangeable in a proper case, so that embodiments of this application can be implemented in another order other than those shown or described herein. In addition, objects distinguished by "first" and "second" are usually of one type, and quantities of the objects are not limited. For example, there may be one or more first objects. In addition, "and/or" used in the description and claims represents at least one of connected objects. The character "/" generally indicates an "or" relationship between associated objects.

It is worth noting that the technologies described in embodiments of this application are not limited to the Long Term Evolution (Long Term Evolution, LTE)/LTE-advanced (LTE-Advanced, LTE-A) system, and may further be applied to other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single Carrier Frequency Division Multiple Access (Single Carrier Frequency Division Multiple Access, SC-FDMA), and other systems. The terms "system" and "network" may be used interchangeably in embodiments of this application. The technology described can be applied to the systems and radio technologies mentioned above, and can also be applied to other systems and radio technologies. In the following descriptions, for the purpose of exemplification, the New Radio (New Radio, NR) system is described, and NR terms are used in most of the following descriptions. However, the technologies may also be applied to applications in addition to NR system applications, for example, the 6^{th} generation (6^{th} Generation, 6G) communication system.

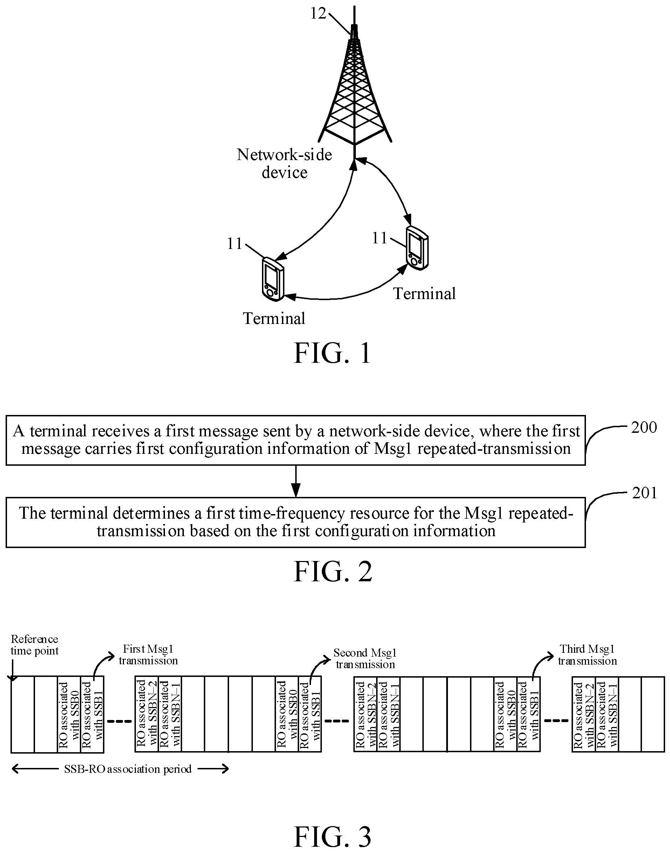

FIG. 1 is a block diagram of a wireless communication system to which an embodiment of this application is applicable. A wireless communication system includes a terminal 11 and a network-side device 12. The terminal 11 may be a terminal-side device such as a mobile phone, a tablet computer (Tablet Personal Computer), a laptop computer (Laptop Computer), or referred to as a notebook computer, a personal digital assistant (Personal Digital Assistant, PDA), a palmtop computer, a netbook, an ultra-mobile personal computer (ultra-mobile personal computer, UMPC), an mobile Internet device (Mobile Internet Device, MID), an augmented reality (augmented reality, AR)/virtual reality(virtual reality, VR) device, a robot, a wearable device (Wearable Device), an in-vehicle device (VUE), a pedestrian terminal (PUE), a smart home appliance (a home device having a wireless communication function, for example, a refrigerator, a television, a washing machine, or furniture), a game console, a personal computer (personal computer, PC), a teller machine, or an automated machine. The wearable device includes a smart watch, a smart band, smart headphones, smart glasses, smart jewelry (a smart bangle, a smart bracelet, a smart ring, a smart necklace, a smart anklet, a smart ankle chain, etc.), a smart wristband, smart clothing, and the like. It should be noted that a specific type of the terminal 11 is not limited in embodiments of this application. The network-side device 12 may include an access network device or a core network device. The access network device 12 may also be referred to as a radio access network device, a radio access network (Radio Access Network, RAN), a radio access network function, or a radio access network unit. The access network device 12 may include a base station, a WLAN access point, a Wi-Fi node or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another proper term in the field, and is not limited to a specific term provided that a same technical effect is achieved. It should be noted that only a base station in an NR system is described as an example in embodiments of this application, and a specific type of the base station is not limited. The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function unit (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that only a core network device in an NR system is described as an example in embodiments of this application, and a specific type of the core network device is not limited.

A method and apparatus for determining a time-frequency resource for Msg1 repeated-transmission and a terminal provided in embodiments of this application are described below in detail through some embodiments and application scenarios thereof with reference to the accompanying drawings.

First, related content of this application is described.

Two types of random access procedures are defined in the 5G NR Rel-15/16 system: a 4-step random access procedure (4-step RACH) and a 2-step random access procedure (2-step RACH). The 4-step RACH is suitable for access at any position within coverage of a cell, while the 2-step RACH is only suitable for access in a region close to a base station or when signal quality is good. In the 4-step RACH, UE first sends Msg1 to a network. Msg1 occupies a predefined time-frequency resource. In addition, an Msg1 signal includes a preamble (preamble). After sending Msg1, the UE monitors a PDCCH in an RAR time window (RA Response window), and receives, using a fallback (fallback) DCI format, that is, DCI format 1_0, a random access response (RAR) scheduled through the PDCCH scrambled with RA-RNTI. If a preamble index in the RAR is the same as a preamble index sent by the UE, it is considered that the RAR has been successfully received. In this case, the UE can stop monitoring the RAR and send Msg3 based on an indication of UL grant carried in the RAR. Msg3 is transmitted on an UL-SCH, and uses the HARQ. The PDCCH is scrambled with TC-RNTI indicated by the RAR, and retransmission of Msg3 is scheduled using the fallback (fallback) DCI format, that is, DCI format 0_0. Msg3 includes a unique sign of the UE. The sign will be used for conflict resolution in step 4. After the network receives Msg3, Msg4 is scheduled using the PDCCH scrambled with the TC-RNTI. When the UE successfully decodes the UE Contention Resolution Identity MAC control element included in Msg4 and matches the UE Contention Resolution Identity MAC control element included in Msg4 with the UE Contention Resolution Identity sent through Msg3, the UE considers that the random access succeeds and sets its C-RNTI to TC-RNTI, that is, completes the 4-step random access.

After completing downlink synchronization and cell search procedures and before executing the random access procedure, the terminal receives and detects SSB signals in an initial downlink BWP to obtain signal quality (for example, SS-RSRPs) of different SSBs. The terminal determines pathloss quality based on quality of the SSB signals, and determines, by referring to a threshold msgA-RSRP-Threshold, to execute the 4-step RACH or the 2-step RACH. The terminal performs SSB selection based on a threshold rsrp-ThresholdSSB indicated in a system message SIB1. If there is an SSB (which may be a plurality of SSBs) with an SS-RSRP higher than the threshold, then the terminal selects one SSB from the SSBs whose SS-RSRPs are higher than the threshold as an associated SSB of the random access procedure. If signal quality of all SSBs is lower than the threshold, then the terminal can select any SSB as the associated SSB of the random access procedure. A specific SSB selection solution is implemented based on the terminal.

In the NR system, the base station may configure, at a time domain position using frequency division multiplexing (Frequency Division Multiplexing, FDM), a plurality of PRACH transmission occasions (Physical Random Access Channel Transmission occasions, also referred to as PRACH occasions), abbreviated as ROs for simplicity in this application. A quantity of ROs on which FDM that can be performed in a time instance (time instance) may be: {1, 2, 4, 8}.

A random access preamble (RACH preamble) can only be transmitted on a time domain resource configured by the parameter PRACHConfigurationIndex, and the random access preamble can only be transmitted in a frequency domain resource configured by the parameter prach-FDM, that is, the PRACH frequency domain resource *n*_{RA} ∈ {0,1,...,*M*-1}, where M is equal to the higher-layer parameter prach-FDM. During initial access, the PRACH frequency domain resource *n*_{RA} is numbered starting from a RO with the lowest frequency in the initial active uplink bandwidth part (initial active uplink bandwidth part) in ascending order; otherwise, the PRACH frequency domain resource *n*_{RA} is numbered starting from a RO with the lowest frequency in the active uplink bandwidth part (active uplink bandwidth part) in ascending order.

In the NR, there is an association between a RO and an SSB (SS/PBCH block, that is, synchronization signal/physical broadcast channel block, which is sometimes directly referred to as an SS block, that is, a synchronization signal block) that is actually sent. One RO may be associated with a plurality of SSBs, or a plurality of SSBs may be associated with one RO. An SSB-RO association is configured by the parameter *ssb-perRACH-OccasionAndCB-PreamblesPerSSB.*

Because the transmit power of the terminal is limited, the transmit power of the terminal is much lower than the transmit power of the network. In an edge region of a cell or a region with limited coverage, uplink signal coverage performance of the terminal is worse than downlink signal coverage, that is, the coverage performance of Msg1 and Msg3 is worse than the coverage performance of Msg2 and Msg4. In the high-frequency band FR2, a difference between coverage performance of an uplink channel and coverage performance of a downlink channel is even more apparent. To improve the coverage performance of the uplink signal, it is considered to introduce repeated-transmission of the uplink signal to the random access procedure, that is, to improve coverage performance by sending Msg1 (PRACH) a plurality of times/repeatedly.

During Msg1 repeated-transmission, a plurality of Msg1 signals may be associated with a same SSB/channel state information reference signal (Channel State Information-Reference Signal, CSI-RS) or different SSBs/CSI-RSs. If the Msg1 repeated-transmission is associated with a same SSB/CSI-RS, the terminal assumes that a selected SSB/CSI-RS beam is the most appropriate beam, and selects the most appropriate beam according to a rule defined in the existing protocol. However, using Msg1 repeated-transmission associated with a single SSB/CSI-RS requires a longer time to complete the Msg1 repeated-transmission. In a scenario with limited coverage, because SSB beams are usually fixed wide beams, there may be a region in which the beams overlap between the SSB beams. In this case, the signal quality SS-RSRPs of a plurality of SSBs detected by the terminal may be similar. Selecting one of the SSB beams for random access means giving up other possible SSB beams. If PRACH resources associated with a plurality of SSBs can be selected to send Msg1, the probability that the base station successfully detects Msg1 can be increased in some cases. In addition, because in a random access stage, measurement of an SS reference signal received power (SS reference signal received power, SS-RSRP) is determined only based on a single measurement result of the SSB, the SS-RSRP measurement result may have a measurement deviation. Therefore, selecting a plurality of SSBs to send Msg1 can also reduce the effect of the SSB measurement deviation on SSB selection. Generally, Msg1 associated with different SSBs may be sent using different uplink beams. The terminal may also perform PRACH repeated-transmission on a RO of an associated SSB by using a beam better matching the SSB.

In addition, based on a RO resource configuration method, it can be learned that a plurality of ROs may be frequency-division multiplexed in a time resource. During Msg1 repeated-transmission, a plurality of time resources determined for a plurality of Msg1 respectively include a plurality of frequency-division multiplexed RO resources. The system needs to define a rule to select a RO resource to enable the base station and the terminal to have a consistent understanding of a RO resource combination for Msg1 repeated-transmission, and avoid the complexity of detecting the Msg1 repeated-transmission by the base station.

An embodiment of this application provides a method for determining a time-frequency resource for Msg1 repeated-transmission.

FIG. 2 is a schematic flowchart 1 of a method for determining a time-frequency resource for Msg1 repeated-transmission according to an embodiment of this application. As shown in FIG. 2, the method includes the following steps.

Step 200. A terminal receives a first message sent by a network-side device, where the first message carries first configuration information of Msg1 repeated-transmission.

Optionally, the first message includes at least one of the following: a system message, downlink control information (Downlink control information, DCI), a Media Access Control layer control element (Media Access Control Control Element, MAC CE), and Radio Resource Control (Radio Resource Control, RRC) signaling.

For example, the terminal receives, from the network-side device, the first message carried by a system message SIB1.

The first message carries first configuration information. The first configuration information indicates, to the terminal, configuration performed by the network-side device for the Msg1 repeated-transmission.

Step 201. The terminal determines a first time-frequency resource for the Msg1 repeated-transmission based on the first configuration information.

The determining a first time-frequency resource for the Msg1 repeated-transmission includes at least one of the following:
determining whether to perform the Msg1 repeated-transmission;
determining a physical random access channel PRACH resource for the Msg1 repeated-transmission; and
determining a frequency hopping parameter of the Msg 1 repeated-transmission.

The first time-frequency resource includes a plurality of ROs in different time periods and is associated with a same downlink signal, an SSB/a CSI-RS, or a plurality of downlink signals, SSBs/CSI-RSs.

It may be understood that, the terminal determines, based on the first configuration information, whether a current cell supports the Msg1 repeated-transmission. Still further, the first configuration information indicates whether to perform the Msg1 repeated-transmission.

In a case that it is determined to perform the Msg1 repeated-transmission, a frequency hopping parameter of the Msg1 repeated-transmission is further determined based on the first configuration information.

Further, a physical random access channel PRACH resource for the Msg1 repeated-transmission is determined based on the frequency hopping parameter of the Msg1 repeated-transmission. That is, a RO corresponding to each Msg1 transmission in the Msg1 repeated-transmission is determined.

It should be noted that the RO corresponding to the each Msg1 transmission in the Msg1 repeated-transmission includes a time domain position and a frequency domain position of a RO resource corresponding to the each Msg1 transmission in the Msg1 repeated-transmission.

It may be understood that in the FR2, that is, the high-frequency band, the base station generally uses analog beams for communication. That is, at each moment, the base station can only send a signal in one analog beam direction or receive a signal in one analog beam direction. Therefore, during random access, a plurality of ROs at one time domain position should be associated with a same analog SSB beam. In the FR2, one SSB is associated with a plurality of ROs, and an additional frequency diversity gain can be obtained through RO frequency hopping.

It may be understood that when the first configuration information includes RO frequency hopping-related indication information, the terminal can determine the frequency hopping parameter of the Msg1 repeated-transmission based on the frequency hopping-related indication information. Therefore, during the Msg1 repeated-transmission, different RO indexes in a frequency domain, that is, ROs with different frequency positions, are selected to obtain a frequency diversity gain.

While the frequency diversity gain is obtained through frequency hopping, a complete overlap of resources used for different Msg1 repetitions on time-frequency resources can also be avoided, thereby improving the coverage performance of the PRACH and reducing the complexity of PRACH resource allocation.

Optionally, in a case that the first configuration information does not include RO frequency hopping-related indication information or the first configuration information indicates no frequency hopping, that the terminal determines the first time-frequency resource for the Msg1 repeated-transmission includes: determining to perform the Msg1 repeated-transmission; determining a physical random access channel PRACH resource for the Msg1 repeated-transmission; and determining a RO corresponding to each Msg1 transmission in the Msg1 repeated-transmission based on a physical random access channel PRACH resource for the Msg1 repeated-transmission.

Optionally, if the terminal determines, based on the first configuration information, not to perform the Msg1 repeated-transmission, the subsequent procedure is not performed.

It may be understood that, after determining the first time-frequency resource for the Msg1 repeated-transmission, the terminal sends Msg1 on the first time-frequency resource.

In embodiments of this application, the terminal determines the first time-frequency resource for the Msg1 repeated-transmission based on the first configuration information of the Msg1 repeated-transmission sent by the network-side device, to implement the Msg1 repeated-transmission, thereby improving coverage performance of a PRACH.

Optionally, the first configuration information includes at least one of the following:
1) Msg1 repeated-transmission pattern.

Optionally, the Msg1 repeated-transmission pattern includes:
a plurality of ROs are associated with a same SSB; or
a plurality of ROs are associated with different SSBs.

That the plurality of ROs are associated with different SSBs means that the plurality of ROs are associated with a plurality of SSBs.

Optionally, according to a rule predefined in a protocol, one of the foregoing patterns is a default pattern. For example, the pattern that a plurality of ROs are associated with a same SSB is used by default to perform the Msg1 repeated-transmission.

2) Plurality of types of SSB combinations.

It should be noted that a plurality of ROs are associated with different SSBs. Further, the different SSBs may correspond to a plurality of SSB combinations. In this case, the first configuration information further includes a plurality of types of SSB combinations for the Msg1 repeated-transmission pattern of associating with a plurality of SSBs. A possible indication implementation is to indicate all SSB combinations at a time in the first configuration information in a form of a bit map (bit map) or an index sequence, or determine another SSB combination based on the first SSB combination. For example, an index of the second SSB combination is a sum of an index of the first SSB combination and a specific offset.

During actual deployment, it may be considered to use a same transmit beam for a plurality of SSBs. The base station instructs the plurality of SSBs with the same beam to perform the Msg1 repeated-transmission.

3) Configuration parameter of an SSB-RO association.

It may be understood that a configuration parameter of an SSB-RO association indicates the SSB-RO association.

The SSB-RO association includes associations between one SSB and a plurality of ROs or associations between one RO and a plurality of SSBs.

For example, the configuration parameter *ssb-perRACH-OccasionAndCB-PreamblesPerSSB* of the SSB-RO association indicates that one SSB is associated with X consecutive ROs, where X is an integer greater than 1.

In this embodiment of this application, optionally, when the first message does not show configuration of a RO frequency hopping offset, the RO frequency hopping offset may be configured based on the configuration parameter of the SSB-RO association.

4) First threshold, indicating a trigger threshold for the Msg1 repeated-transmission.

In an embodiment, the terminal determines, based on a trigger threshold for the Msg1 repeated-transmission, whether to perform the Msg1 repeated-transmission.

The first threshold may be an independently configured trigger threshold for the Msg1 repeated-transmission, or a threshold for determining whether to perform a random access procedure of the Msg3 repeated-transmission is reused as the first threshold.

The threshold for determining whether to perform the random access procedure of the Msg3 repeated-transmission is a trigger threshold for the random access procedure of the Msg3 repeated-transmission.

5) Second threshold, indicating a selection threshold for an associated SSB of the Msg1 repeated-transmission.

In an embodiment, the terminal selects, based on a selection threshold for an associated SSB of the Msg1 repeated-transmission, an associated SSB of the Msg1 repeated-transmission.

The associated SSB of the Msg1 repeated-transmission is an SSB associated with the Msg1 repeated-transmission.

The second threshold may be an independently configured threshold for selecting an associated SSB of the Msg1 repeated-transmission, or a threshold for selecting an associated SSB in a random access procedure of the Msg3 repeated-transmission is reused as the second threshold.

The threshold for selecting the associated SSB in the random access procedure of the Msg3 repeated-transmission is a selection threshold for an associated SSB in the random access procedure of the Msg3 repeated-transmission.

6) Whether to enable RO frequency hopping.

It may be understood that if the network-side device indicates to enable RO frequency hopping, it indicates supporting frequency hopping of a RO resource for the Msg1 repeated-transmission in a frequency domain.

If the network-side device indicates not to enable RO frequency hopping, it indicates not supporting frequency hopping of a RO resource for the Msg1 repeated-transmission in a frequency domain.

7) RO frequency hopping offset.

Optionally, if the RO frequency hopping is enabled, the network-side device further indicates a RO frequency hopping offset RO offset.

The RO frequency hopping offset is in unit of RO.

8) Frequency hopping count or frequency hopping step size.

Optionally, the network-side device configures a RO frequency hopping step size.

For example, after every n Msg1 transmissions, RO frequency hopping is performed, where n is a RO frequency hopping step size.

Optionally, when configuration of a RO frequency hopping step size is not shown, the step size is set to 1 by default, that is, each time Msg1 is sent, RO frequency hopping is performed once.

9) Msg1 repeated-transmission count.

It should be noted that the Msg1 repeated-transmission count may be indicated by the first configuration information or may be determined based on a value predefined in a protocol. Optionally, a repeated-transmission count set including a plurality of optional values is configured in the first configuration information, and the terminal selects an actual Msg1 repeated-transmission count based on channel quality.

10) Pilot sequence (preamble) resource set for the Msg1 repeated-transmission.

11) RO mask of the Msg1 repeated-transmission.

Optionally, the first configuration information may further include a RO mask of the Msg1 repeated-transmission.

It should be noted that if the RO mask is configured on the network-side device, the terminal needs to select a RO from an effective RO set indicated by the RO mask and perform RO frequency hopping based on a RO offset. Further, optionally, the first configuration information includes a plurality of RO masks, respectively corresponding to different Msg1 repeated-transmission counts.

Optionally, the determining whether to perform the Msg1 repeated-transmission and determining a physical random access channel PRACH resource for the Msg1 repeated-transmission includes:
determining, in a case that a first condition is met, to perform the Msg1 repeated-transmission, and determining the PRACH resource for the Msg1 repeated-transmission.

The first condition includes at least one of the following:
that 4-step random access fails N times, and a value of N is predefined in a protocol or configured by the first message, where the 4-step random access is a 4-step random access procedure of Msg1 single-transmission and Msg3 single-transmission and/or a 4-step random access procedure of Msg1 single-transmission and Msg3 repeated-transmission;
that first signaling is received, where the first signaling instructs the terminal to perform the Msg1 repeated-transmission, and carries indication information related to RO frequency hopping, where the first signaling may be DCI or a MAC CE or RRC signaling; and
that signal quality of a downlink signal is lower than or not higher than the first threshold, where
that the first threshold is configured by the first message, or a threshold for determining whether to perform a random access procedure of Msg3 repeated-transmission is reused as the first threshold.

That the terminal determines to perform the Msg1 repeated-transmission includes the following cases.

Case 1. In case that 4-step random access fails N times, the Msg1 repeated-transmission is performed.

Optionally, that the 4-step random access fails N times includes:
in a 4-step random access procedure, the terminal tries to perform Msg1 single-transmission N times and does not receive corresponding Msg2; or
in a 4-step random access procedure, the terminal tries to perform Msg1 single-transmission N times and receives corresponding Msg2, but fails to transmit Msg3, where
the value of N is predefined in the protocol or configured by the first message.

N may also be understood as a threshold. In a 4-step random access procedure, if the terminal tries Msg1 single-transmission N times and does not receive corresponding Msg2, the terminal performs the Msg1 repeated-transmission at the (N+1)^{th} random access attempt, or if the terminal performs Msg1 single-transmission N times and receives corresponding Msg2, but fails in Msg3 transmission, the terminal performs the Msg1 repeated-transmission at the (N+1)^{th} random access attempt.

Case 2. In a case that the terminal receives first signaling, the terminal performs the Msg1 repeated-transmission, where the first signaling instructs the terminal to perform the Msg1 repeated-transmission and carries RO frequency hopping-related indication information.

It may be understood that the network-side device can explicitly instruct the terminal to perform the Msg1 repeated-transmission.

The RO frequency hopping-related indication information includes at least one of the following: whether to enable RO frequency hopping, a RO frequency hopping offset, and a frequency hopping count or a frequency hopping step size.

Optionally, the first signaling includes DCI or a MAC CE or RRC signaling.

Case 3. In a case that signal quality of a downlink signal is lower than or not higher than the first threshold, the terminal performs the Msg1 repeated-transmission.

The first threshold is configured by the first message, or a threshold for determining whether to perform a random access procedure of Msg3 repeated-transmission is reused as the first threshold.

Optionally, the downlink signal may be an SSB or a CSI-RS.

Further, the downlink signal may be one or more downlink reference signal SSBs or CSI-RSs selected by the terminal, for example, a SSB with the highest RSRP.

The signal quality of downlink signal may be RSRP or reference signal received quality (reference signal received quality, RSRQ) or a signal-to-noise ratio and interference ratio (signal-to-noise and interference ratio, SINR) representing a pathloss (pathloss).

When the signal quality of the downlink signal is lower than a first threshold T0, the terminal performs the Msg1 repeated-transmission; otherwise, performs the Msg1 single-transmission.

For example, in an implementation, the signal quality (RSRPs or RSRQ or SINRs) of all SSBs/CSI-RSs is lower than first threshold T0, that is, a maximum value of the signal quality of all the SSBs/CSI-RSs is selected for comparison with the first threshold T0. If the maximum value is lower than or not higher than the first threshold T0, the Msg1 repeated-transmission is performed; otherwise, the Msg1 single-transmission is performed.

To perform the Msg1 repeated-transmission, a PRACH resource for Msg1 repeated-transmission needs to be determined/selected first. How to determine the PRACH resource for the Msg1 repeated-transmission is described below.

Optionally, the determining a PRACH resource for the Msg1 repeated-transmission includes step 300, step 301, and step 302.

Step 300. Determine, based on the Msg1 repeated-transmission pattern and the second threshold, an SSB or an SSB combination associated with the Msg1 repeated-transmission.

The second threshold is configured by the first message, or a threshold for selecting an associated SSB in a random access procedure of Msg3 repeated-transmission is reused as the second threshold.

It should be noted that the SSB in this embodiment of this application may be replaced with another downlink reference signal, for example, a CSI-RS. The SSB combination in this embodiment of this application may be replaced with another combination of a downlink reference signal, for example, a CSI-RS combination. In this embodiment of this application, description is provided by using the SSB as an example, but is not limited to the SSB.

For the Msg1 repeated-transmission pattern in which a plurality of ROs are associated with a same SSB, the determining, based on the Msg1 repeated-transmission pattern and the second threshold, an SSB associated with the Msg1 repeated-transmission includes:
comparing, by the terminal, signal quality of all detected SSBs with the second threshold, to select an SSB with signal quality higher than the second threshold as the SSB associated with the Msg1 repeated-transmission; or
implementing, in a case that there are a plurality of SSBs whose signal quality is higher than the second threshold, based on the terminal, or selecting randomly one of the plurality of SSBs as the SSB associated with the Msg1 repeated-transmission; or
implementing, in a case that there is no SSB whose signal quality is higher than the second threshold, based on the terminal, or selecting randomly one SSB as the SSB associated with the Msg1 repeated-transmission.

Optionally, for the Msg1 repeated-transmission pattern in which a plurality of ROs are associated with different SSBs, the determining, based on the Msg1 repeated-transmission pattern and the second threshold, an SSB combination associated with the Msg1 repeated-transmission includes:
comparing signal quality of SSB combinations with the second threshold, and selecting one of the SSB combinations as the SSB combination associated with the Msg1 repeated-transmission.

The signal quality of the SSB combination may be a result with the best signal quality in the SSB combinations, or the worst result in the SSB combinations, or a weighted result of the signal quality of the SSB combinations, which is specified in a protocol or configured by a network.

Optionally, the terminal selects, from the plurality of SSB combinations, a SSB combination whose signal quality is higher than the second threshold as the SSB combination of the Msg1 repeated-transmission, or
implements, in a case that there are a plurality of SSB combinations whose signal quality is higher than the second threshold, based on the terminal, or selects randomly one of the plurality of SSB combinations as the SSB combination associated with the Msg1 repeated-transmission, or
implements, in a case that the plurality of SSB combinations do not include an SSB combination whose signal quality is higher than the second threshold, based on the terminal, or select randomly one SSB combination from the plurality of SSB combinations as the SSB combination associated with the Msg1 repeated-transmission.

Still further, the terminal determines an Msg1 repeated-transmission count based on signal quality of the SSB or the SSB combination.

Step 301. Determine, based on an association between the SSB/SSB combination associated with the Msg1 repeated-transmission and a RO, a candidate RO set of the PRACH resource for the Msg1 repeated-transmission.

It may be understood that after determining the SSB or SSB combination associated with the Msg1 repeated-transmission, the terminal may determine, based on the SSB-RO association, a RO set corresponding to the SSB or SSB combination associated with the Msg1 repeated-transmission, and may use the RO set corresponding to the SSB or SSB combination associated with the Msg1 repeated-transmission as a candidate RO set of the PRACH resource for the Msg1 repeated-transmission or select a plurality of ROs in the RO set as a plurality of ROs for the Msg1 repeated-transmission.

Step 302. Determine a RO corresponding to each Msg1 transmission in the Msg1 repeated-transmission.

In this embodiment of this application, the terminal determines, based on the Msg1 repeated-transmission pattern and the second threshold, the SSB or SSB combination associated with the Msg1 repeated-transmission, then may determine, based on the SSB/SSB combination-RO association, the PRACH resource for the Msg1 repeated-transmission, and subsequently, determines, based on the PRACH resource, the RO corresponding to each Msg1 transmission in the Msg1 repeated-transmission, so that the Msg1 repeated-transmission can be achieved, and the coverage performance of the PRACH can be improved.

Optionally, the determining a RO corresponding to each Msg1 transmission in the Msg1 repeated-transmission includes step 400 and step 401.

Step 400. Determine a time domain position of the RO corresponding to the each Msg1 transmission in the Msg1 repeated-transmission.

It may be understood that, the terminal first determines time domain positions of a plurality of ROs the Msg1 repeated-transmission, and then, selects, from a plurality of ROs on a same time domain resource RO, based on a frequency hopping parameter, for example, a RO frequency hopping offset RO offset, one RO as a first time-frequency resource of the Msg1 repeated-transmission.

Optionally, the determining a time domain position of the RO corresponding to the each Msg1 transmission in the Msg1 repeated-transmission includes:
for the Msg1 repeated-transmission pattern in which a plurality of ROs are associated with a same SSB, time domain positions of the plurality of ROs of the Msg1 repeated-transmission correspond to a plurality of consecutive SSB-RO association periods.

An association period corresponding to first Msg1 of the Msg1 repeated-transmission is determined based on a reference time point. That is, a RO associated with an SSB in the first period of association starting from the reference time point is a RO corresponding to the first Msg1 transmission.

The reference time point is determined based on predefinition in the protocol or configuration of the first message. For example, the reference time point is a starting moment of frame=0 or a starting moment of an association pattern period (association pattern period).

FIG. 3 is an example diagram of determining a time domain position of a RO of Msg1 repeated-transmission associated with a same SSB according to an embodiment of this application. As shown in FIG. 3, assuming that a plurality of ROs are associated with SSB1, a first SSB-RO association period is determined based on a reference time point. In the first SSB-RO association period, an RO associated with SSB1 is a RO corresponding to first Msg1 in the Msg1 repeated-transmission. In a next SSB-RO association period, a RO with SSB1 is a RO corresponding to second Msg1 in the Msg1 repeated-transmission, and so on. That is, time domain positions of the plurality of ROs of the Msg1 repeated-transmission correspond to a plurality of consecutive SSB-RO association periods.

Optionally, the determining a time domain position of the RO corresponding to the each Msg1 transmission in the Msg1 repeated-transmission includes:
for the Msg1 repeated-transmission pattern in which a plurality of ROs are associated with different SSBs, time domain positions of the ROs associated with the SSBs fall within one SSB-RO association period.

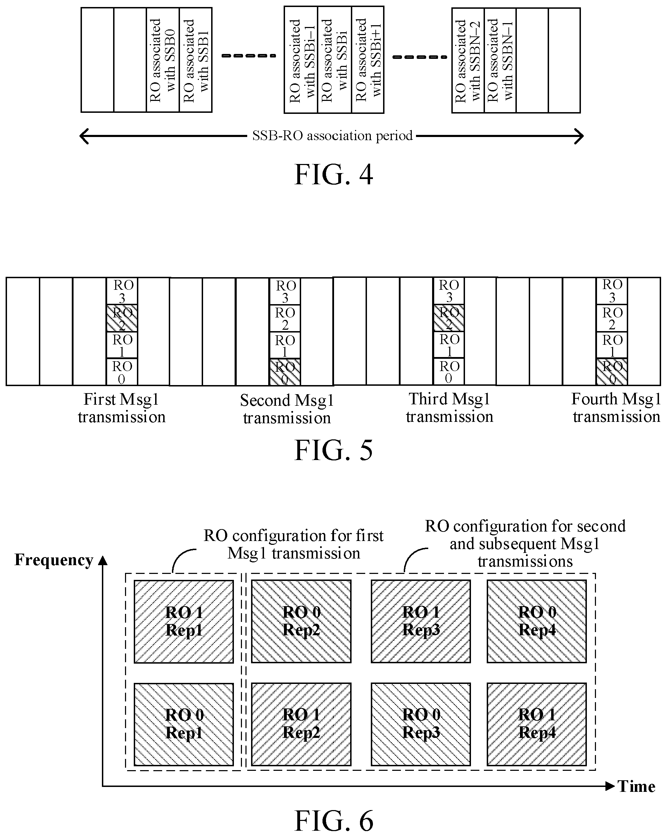

FIG. 4 is an example diagram of determining a time domain position of a RO of Msg1 repeated-transmission associated with different SSBs according to an embodiment of this application. As shown in FIG. 4, the terminal selects a combination of SSB1 and SSBi for the Msg1 repeated-transmission. The RO corresponding to the first Msg1 in the Msg1 repeated-transmission is a RO associated with SSB1, and the RO corresponding to the second Msg1 in the Msg1 repeated-transmission is a RO associated with SSBi. The RO associated with SSB1 and the RO associated with SSBi are within a same SSB-RO association period.

Step 401. Determine, based on the frequency hopping parameter, a frequency domain position of the RO corresponding to the each Msg1 transmission in the Msg1 repeated-transmission.

Based on the time domain position of the RO corresponding to the each Msg1 transmission in the Msg1 repeated-transmission, a frequency domain position of a RO of a first Msg1 transmission in the Msg1 repeated-transmission is first determined, then, based on the frequency hopping parameter and the frequency domain position of the RO of the first Msg1 transmission, a frequency domain position of a RO of a second Msg1 transmission is determined, based on the frequency hopping parameter and a frequency domain position of a RO of an (i-1)^{th} Msg1 transmission, a frequency domain position of a RO of an i^{th} Msg1 transmission is determined, and so on, thereby determining the frequency domain position of the RO corresponding to the each Msg1 transmission in the Msg1 repeated-transmission.

Optionally, the determining, based on the frequency hopping parameter, a frequency domain position of the RO corresponding to the each Msg1 transmission in the Msg1 repeated-transmission includes:
determining a frequency domain position of a RO of a first Msg1 transmission in the Msg1 repeated-transmission according to a rule predefined in the protocol or by randomly selecting a RO from a RO set at a time domain position of the first Msg1 transmission; and
determining a frequency domain position of a RO of an i^{th} Msg1 transmission in the Msg1 repeated-transmission based in a frequency domain position of a RO and a RO frequency hopping offset of an (i-1)^{th} Msg1 transmission in the Msg1 repeated-transmission, where
i is a positive integer greater than or is equal to 2.

In an embodiment, the rule predefined in the protocol may be the frequency domain position of the RO for the first Msg1 transmission determined based on a UE ID.

The RO frequency hopping ensures that RO frequency hopping is performed in X available ROs associated with one SSB. indexRO (i^{th} transmission)=mod(indexRO ((i-1)^{th} transmission))+ROoffset, X), where indexRO represents indexes of a plurality of ROs multiplexed in a frequency domain, ROoffset represents a RO frequency hopping offset, which is configured in the first configuration information or predefined in the protocol.

FIG. 5 is a schematic diagram 1 of RO frequency hopping according to an embodiment of this application. As shown in FIG. 5, RO offset=2.

Optionally, the determining a frequency hopping parameter of the Msg1 repeated-transmission includes:
determining the RO frequency hopping offset based on the configuration parameter of the SSB-RO association or the rule predefined in the protocol.

In an embodiment, the configuration parameter *ssb-perRACH-OccasionAndCB-PreamblesPerSSB* of the SSB-RO association indicates that one SSB is associated with X consecutive ROs, where X is an integer greater than 1, and RO offset is a*X, where a is a real number greater than 0 and less than 1, for example, a=1/2. If a*X is not an integer, a result is further integerized by rounding down or rounding up. A value of a is predefined in the protocol.

In an embodiment, the rule predefined in the protocol is to determine the RO frequency hopping offset based on a number of RO frequency domain multiplexing.

In particular, when RO offset=0, it indicates that ROs occupied by multiple Msg1 during the Msg1 repeated-transmission share a same frequency resource, or it indicates that a plurality of consecutive ROs associated with the SSB have a same logical position.

If the RO mask is configured on the network-side device, the terminal needs to select a RO from an effective RO set indicated by the RO mask and perform RO frequency hopping based on a RO offset.

In some embodiments, an RO for a second repetition and a subsequent repetition is an independently configured RO.

It should be noted that the "second repetition" described in this embodiment of this application refers to a second transmission of same Msg1 before a RAR window ends or starts. (Optional definition) An N^{th} repetition may be understood as an N^{th} Msg1 transmission determined chronologically in one Msg1 repeated-transmission.

In some optional embodiments, the method further includes:
determining, by the terminal in a case that the first configuration information further includes a RO for second and subsequent Msg1 transmissions in the Msg1 repeated-transmission, that the network-side device supports the Msg1 repeated-transmission. It may be understood that if a parameter of the Msg1 repeated-transmission is configured in the first configuration information, it indicates that the current cell supports/allows Msg1 repeated-transmission.

It may be understood that, after detecting an SSB and obtaining a system message, the terminal determines whether to perform Msg1 repeated-transmission. In a case that the first configuration information further includes a RO for second and subsequent Msg1 transmissions in the Msg1 repeated-transmission, that the network-side device supports the Msg1 repeated-transmission.

Optionally, the Msg1 repeated-transmission pattern includes:
the RO for the second and subsequent Msg1 transmissions in the Msg1 repeated-transmission and a RO for a first Msg1 transmission in the Msg1 repeated-transmission are associated with a same SSB; and
the RO for the second and subsequent Msg1 transmissions in the Msg1 repeated-transmission and a RO for a first Msg1 transmission in the Msg1 repeated-transmission are associated with one or more different SSBs.

Further, the first message indicates that the Msg1 repeated-transmission pattern is whether an additionally configured RO and a RO for first Msg1 transmission are associated with a same SSB or the additionally configured RO and the RO for the first Msg1 transmission may associated with one or more different SSBs.

That the RO for the second and subsequent Msg1 transmissions in the Msg1 repeated-transmission and a RO for a first Msg1 transmission in the Msg1 repeated-transmission are associated with one or more different SSBs means that an SSB associated with the RO for the second and subsequent Msg1 transmissions is different from an SSB associated with the RO for the first Msg1 transmission, and there may be a plurality of different SSBs.

It should be noted that the additionally configured RO is the RO for the second and subsequent Msg1 transmissions in the Msg1 repeated-transmission.

Further, optionally, according to the rule predefined in the protocol, one of the foregoing patterns is a default pattern. For example, the pattern that the additionally configured RO and the RO for the first Msg1 transmission are associated with one or more SSBs is used by default to perform the Msg1 repeated-transmission.

Optionally, in a case that the RO for the second and subsequent Msg1 transmissions in the Msg1 repeated-transmission and the RO for the first Msg1 transmission in the Msg1 repeated-transmission are associated with one or more different SSBs, the first message further carries a plurality of SSB combinations. The plurality of SSB combinations are for associating with the Msg1 repeated-transmission pattern in which a RO for second and subsequent Msg1 transmissions in current Msg1 repeated-transmission and a RO for a first Msg1 transmission in the Msg1 repeated-transmission are associated with one or more different SSBs.

Further, the terminal determines whether to select a PRACH resource supporting Msg1 repeated-transmission, which can be based on one or more of the following options:
1) A downlink measurement metric (for example, a RSRP, RSRQ, or a RSSI) is lower than or not higher than a first threshold T0.
   The first threshold may be an independently configured value, or may be an existing configuration value or a function of the existing configuration value. For example, an RSRP threshold for determining whether to perform a random access procedure of Msg3 repeated-transmission is reused as the first threshold.
2) Whether a count of PRACH preamble repeated-transmission has been sent repeatedly exceeds a third threshold.

The third threshold may be an independently configured value, or may be an existing configuration value or a function of the existing configuration value, for example, a half of a maximum retransmission count for determining whether a random access error needs to be announced.

Further, the terminal selects an SSB for a first Msg1 transmission based on a second threshold T1 for selecting an SSB for a RO resource for the first Msg1 transmission in the Msg1 repeated-transmission.

The second threshold may be independently configured, or a threshold for selecting an associated SSB in a random access procedure of the Msg3 repeated-transmission is reused as the second threshold. Alternatively, an RSRP threshold for SSB selection when Msg1 repeated-transmission is not performed (that is, during Msg1 single-transmission).

Further, the terminal determines a RO and a preamble sequence for the first Msg1 transmission based on the selected SSB. Further, the terminal can determine, based on the RO and preamble sequence of the first Msg1 transmission and the frequency hopping parameter, positions and a quantity of PRACH resources for the second and subsequent Msg1 transmissions in the Msg1 repeated-transmission.

Optionally, the method further includes:
determining, in a case that a plurality of ROs are configured in a frequency domain, that the Msg1 repeated-transmission supports frequency hopping.

"A plurality of ROs are configured in a frequency domain" herein may refer to configuration of a RO for the first Msg1 transmission in the frequency domain.

In this case, provided that the configuration of the RO for the first Msg1 transmission supports multiplexing of the plurality of ROs in the frequency domain, it is considered that the Msg1 repeated-transmission supports frequency hopping. FIG. 6 is a schematic diagram 2 of RO frequency hopping according to an embodiment of this application. In FIG. 6, a repeated-transmission count is 4, and a frequency hopping offset is 2. As shown in FIG. 6, when two ROs are configured in a frequency domain for a first Msg1 transmission, it is determined that the Msg1 repeated-transmission supports frequency hopping.

Optionally, if frequency hopping is supported, the network-side device indicates a frequency hopping offset, which, for example, is in unit of RO.

Further, optionally, the network-side device further configures a RO frequency hopping step size. That is, RO frequency hopping is performed every several Msg1 transmissions. For example, optionally, a default step size may be 1, that is, RO frequency hopping is performed once every time Msg1 transmission is performed.

Optionally, the method further includes:
determining the Msgl repeated-transmission count based on a quantity of ROs for the second and subsequent Msg1 transmissions in the Msg1 repeated-transmission in the first configuration information.

Optionally, the method further includes:
determining, based on an SSB pattern configured or predetermined by the network-side device, an SSB associated with the second and subsequent Msg1 transmissions in the Msg1 repeated-transmission.

For the Msg1 repeated-transmission pattern of associating with a plurality of SSBs, an associated SSB for transmission of second and subsequent repetitions may be determined according to at least one of the following methods:
1) SSB pattern configured based on the network-side device.
   For example, a plurality of SSBs of neighboring beams or a same beam may be respectively mapped to ROs for transmission of the Msg1 repeated-transmission.
2) Predetermined SSB pattern.

For example, if a first repetition is associated with SSB0, on the UE and the network, an n^{th} repetition is associated with SSBx, *x* = (*n* - 1) *mod N.*

*x* herein is an index of an associated SSB, and *N* is a quantity of SSBs that are actually sent.

In embodiments of this application, the terminal determines the first time-frequency resource for the Msg1 repeated-transmission based on the first configuration information of the Msg1 repeated-transmission sent by the network-side device, and obtains a frequency diversity gain by selecting ROs with different frequency positions, which may also avoid resources used by different Msg1 repetitions from completely overlapping with each other on the time-frequency resource. In this way, the coverage performance of the Msg1 repeated-transmission can be improved, and the complexity of PRACH resource allocation can be reduced.

Optionally, the receiving, by a terminal, a first message sent by a network-side device, where the first message carries first configuration information of Msg1 repeated-transmission, includes:
receiving, by the terminal, the first message, where the first message carries the first configuration information indicating execution of the Msg1 repeated-transmission in a contention-free random access procedure.

In this embodiment, the first message carries the first configuration information indicating execution of the Msg1 repeated-transmission in a contention-free random access procedure.

Optionally, the first configuration information includes at least one of the following:
a) Random access type.

Optionally, the random access type includes at least one of the following:
a 4-step random access procedure of Msg1 single-transmission and Msg3 single-transmission;
a 4-step random access procedure of Msg1 single-transmission and Msg3 repeated-transmission;
a 4-step random access procedure of Msg1 repeated-transmission and Msg3 single-transmission; and
a 4-step random access procedure of Msg1 repeated-transmission and Msg3 repeated-transmission.

Specifically, the A-bits field is defined for indication, where A may be 2. Alternatively, the RACH type may be determined based on a correspondence of a preamble index indicated by DCI within a preamble index range of different RACH types.

It may be determined, based on a random access type, whether to perform the Msg1 repeated-transmission.

b) Msg1 repeated-transmission pattern.

Optionally, the Msg1 repeated-transmission pattern includes:
an Msg1 repeated-transmission pattern of associating with a same SSB, or an Msg1 repeated-transmission pattern of associating with a plurality of SSBs.

c) Msg1 repeated-transmission count.

d) Whether to enable RO frequency hopping.

Whether to enable RO frequency hopping indicates whether the Msg1 repeated-transmission supports frequency hopping. Alternatively, it is determined according to configuration of the system message by default whether to enable RO frequency hopping.

e) RO frequency hopping offset.

Optionally, the first configuration information indicates a RO frequency hopping offset RO offset of the Msg1 repeated-transmission.

Alternatively, the RO offset is determined according to a rule predefined in the protocol or configuration of the system message.

f) RO set.

Optionally, a RO configuration set, for example, a RO set on a NUL carrier, or a RO set on a NUL carrier, or 2-step RO set, or a RO set for a 4-step RACH with Msg3 repetition, or a RO set specifically configured for Msg1 repeated-transmission, is indicated by a field.

Optionally, the first configuration message may further include a RO for the second and subsequent Msg1 transmissions in the Msg1 repeated-transmission.

The terminal determines a first time-frequency resource for the Msg1 repeated-transmission based on the first configuration information.

Optionally, the determining, by the terminal, a first time-frequency resource for the Msg1 repeated-transmission based on the first configuration information includes:
determining whether to perform the Msg1 repeated-transmission;
determining a physical random access channel PRACH resource for the Msg1 repeated-transmission;
determining a frequency hopping parameter of the Msg1 repeated-transmission; and
determining a RO corresponding to each Msg1 transmission in the Msg1 repeated-transmission.

In this embodiment, for the determining, by the terminal, a first time-frequency resource for the Msg1 repeated-transmission based on the first configuration information, refer to the related procedure of determining, by the terminal, a first time-frequency resource for the Msg1 repeated-transmission based on the first configuration information in the foregoing embodiments, and details are not described herein a gain.

It should be noted that in a case that the first configuration message may further include the RO for the second and subsequent Msg1 transmissions in the Msg1 repeated-transmission, the method further includes at least one of the following:
determining the Msg1 repeated-transmission count based on a quantity of ROs for the second and subsequent Msg1 transmissions and/or a frequency hopping pattern (frequency hopping pattern) in the Msg1 repeated-transmission in the first configuration information; and
determining, in a case that a plurality of ROs are configured in a frequency domain, that the Msg1 repeated-transmission supports frequency hopping.

For the Msg1 repeated-transmission scheduled by DCI, fields in DCI 1-0 are used to indicate configuration information of the Msg1 repeated-transmission, including a random access type, an Msg1 repeated-transmission pattern, an Msg1 repeated-transmission count, whether to enable RO frequency hopping, and a related parameter of RO frequency hopping.

In this embodiment of this application, the terminal receives the first configuration information that indicates the Msg1 repeated-transmission in the contention-free random access procedure and that is sent by the network-side device, determines the first time-frequency resource for the Msg1 repeated-transmission in the contention-free random access procedure based on the first configuration information, to implement Msg1 repeated-transmission in the contention-free random access procedure, thereby improving coverage performance of a PRACH.

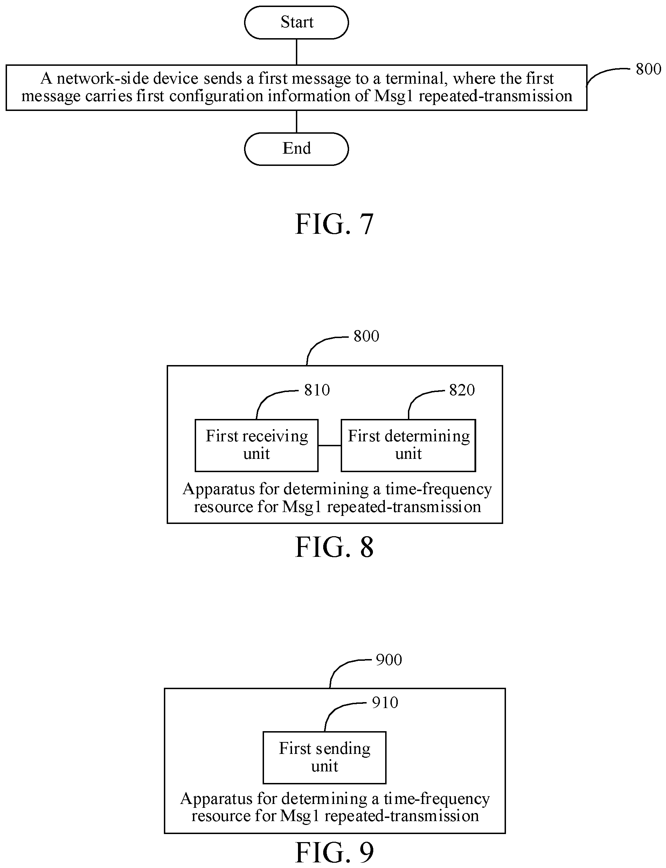

FIG. 7 is a schematic flowchart 2 of a method for determining a time-frequency resource for Msg1 repeated-transmission according to an embodiment of this application. As shown in FIG. 7, the method is applied to a network-side device. The method includes the following steps.

Step 700. A network-side device sends a first message to a terminal, where the first message carries first configuration information of Msg1 repeated-transmission.

It may be understood that, the network-side device indicates the first configuration information of the Msg1 repeated-transmission to the terminal by sending the first message to the terminal.

Optionally, the first message includes at least one of the following: a system message, DCI, a MAC CE, and RRC signaling.

Optionally, the first configuration information includes at least one of the following:
1) Msg1 repeated-transmission pattern.

Optionally, the Msg1 repeated-transmission pattern includes:
a plurality of ROs are associated with a same SSB; or
a plurality of ROs are associated with different SSBs.

That the plurality of ROs are associated with different SSBs means that the plurality of ROs are associated with a plurality of SSBs.

Optionally, according to a rule predefined in a protocol, one of the foregoing patterns is a default pattern. For example, the pattern that a plurality of ROs are associated with a same SSB is used by default to perform the Msg1 repeated-transmission.

2) Plurality of types of SSB combinations.

It should be noted that a plurality of ROs are associated with different SSBs. Further, the different SSBs may correspond to a plurality of SSB combinations. In this case, the first configuration information further includes a plurality of types of SSB combinations for the Msg1 repeated-transmission pattern of associating with a plurality of SSBs. A possible indication implementation is to indicate all SSB combinations at a time in the first configuration information in a form of a bit map (bit map) or an index sequence, or determine another SSB combination based on the first SSB combination. For example, an index of the second SSB combination is a sum of an index of the first SSB combination and a specific offset.

During actual deployment, it may be considered to use a same transmit beam for a plurality of SSBs. The base station instructs the plurality of SSBs with the same beam to perform the Msgl repeated-transmission.

3) Configuration parameter of an SSB-RO association.

It may be understood that a configuration parameter of an SSB-RO association indicates the SSB-RO association.

The SSB-RO association includes associations between one SSB and a plurality of ROs or associations between one RO and a plurality of SSBs.

For example, the configuration parameter *ssb-perRACH-OccasionAndCB-PreamblesPerSSB* of the SSB-RO association indicates that one SSB is associated with X consecutive ROs, where X is an integer greater than 1.

In this embodiment of this application, optionally, when the first message does not show configuration of a RO frequency hopping offset, the RO frequency hopping offset may be configured based on the configuration parameter of the SSB-RO association.

4) First threshold, indicating a trigger threshold for the Msg1 repeated-transmission.

In an embodiment, the terminal determines, based on a trigger threshold for the Msg1 repeated-transmission, whether to perform the Msg1 repeated-transmission.

The first threshold may be an independently configured trigger threshold for the Msg1 repeated-transmission, or a threshold for determining whether to perform a random access procedure of the Msg3 repeated-transmission is reused as the first threshold.

The threshold for determining whether to perform the random access procedure of the Msg3 repeated-transmission is a trigger threshold for the random access procedure of the Msg3 repeated-transmission.

5) Second threshold, indicating a selection threshold for an associated SSB of the Msg1 repeated-transmission.

In an embodiment, the terminal selects, based on a selection threshold for an associated SSB of the Msg1 repeated-transmission, an associated SSB of the Msg1 repeated-transmission.

The associated SSB of the Msg1 repeated-transmission is an SSB associated with the Msg1 repeated-transmission.

The second threshold may be an independently configured threshold for selecting an associated SSB of the Msg1 repeated-transmission, or a threshold for selecting an associated SSB in a random access procedure of the Msg3 repeated-transmission is reused as the second threshold.

The threshold for selecting the associated SSB in the random access procedure of the Msg3 repeated-transmission is a selection threshold for an associated SSB in the random access procedure of the Msg3 repeated-transmission.

6) Whether to enable RO frequency hopping.

It may be understood that if the network-side device indicates to enable RO frequency hopping, it indicates supporting frequency hopping of a RO resource for the Msg1 repeated-transmission in a frequency domain.

If the network-side device indicates not to enable RO frequency hopping, it indicates not supporting frequency hopping of a RO resource for the Msg1 repeated-transmission in a frequency domain.

7) RO frequency hopping offset.

Optionally, if the RO frequency hopping is enabled, the network-side device further indicates a RO frequency hopping offset RO offset.

The RO frequency hopping offset is in unit of RO.

8) Frequency hopping count or frequency hopping step size.

Optionally, the network-side device configures a RO frequency hopping step size.

For example, after every n Msg1 transmissions, RO frequency hopping is performed, where n is a RO frequency hopping step size.

Optionally, when configuration of a RO frequency hopping step size is not shown, the step size is set to 1 by default, that is, each time Msg1 is sent, RO frequency hopping is performed once.

9) Msg1 repeated-transmission count.

It should be noted that the Msg1 repeated-transmission count may be indicated by the first configuration information or may be determined based on a value predefined in a protocol. Optionally, a repeated-transmission count set including a plurality of optional values is configured in the first configuration information, and the terminal selects an actual Msg1 repeated-transmission count based on channel quality.

10) Preamble resource set for the Msg1 repeated-transmission.

11) RO mask of the Msg1 repeated-transmission.

Optionally, the first configuration information may further include a RO mask of the Msg1 repeated-transmission.

It should be noted that if the RO mask is configured on the network-side device, the terminal needs to select a RO from an effective RO set indicated by the RO mask and perform RO frequency hopping based on a RO offset. Further, optionally, the first configuration information includes a plurality of RO masks, respectively corresponding to different Msg1 repeated-transmission counts.

Optionally, the method further includes:
sending first signaling to the terminal, where the first signaling instructs the terminal to perform the Msg1 repeated-transmission, and carries indication information related to RO frequency hopping.

It may be understood that the network-side device can explicitly instruct the terminal to perform the Msg1 repeated-transmission.

The RO frequency hopping-related indication information includes at least one of the following: whether to enable RO frequency hopping, a RO frequency hopping offset, and a frequency hopping count or a frequency hopping step size.

Optionally, the first signaling includes DCI or a MAC CE or RRC signaling.

Optionally, the first configuration information further includes a RO for the second and subsequent Msg1 transmissions in the Msg1 repeated-transmission.

It may be understood that, the network-side device may independently configure the RO for the second and subsequent Msg1 transmissions by carrying, in the first configuration information, the RO for the second and subsequent Msg1 transmissions in the Msg1 repeated-transmission.

After detecting an SSB and obtaining a system message, the terminal determines whether to perform Msg1 repeated-transmission. In a case that the first configuration information further includes a RO for second and subsequent Msg1 transmissions in the Msg1 repeated-transmission, that the network-side device supports the Msg1 repeated-transmission.

Optionally, the method further includes:
sending, by the terminal, the SSB pattern, where the SSB pattern is provided for the terminal to determine an SSB associated with the second and subsequent Msg1 transmissions in the Msg1 repeated-transmission.

It may be understood that, the network-side device sends the SSB pattern to the terminal, for the terminal to determine an SSB associated with the second and subsequent Msg1 transmissions in the Msg1 repeated-transmission.

The SSB pattern is for associating Msg1 transmission with an SSB.

For example, a plurality of SSBs of neighboring beams or a same beam may be respectively mapped to different ROs for transmission of the Msg1 repeated-transmission.

In another example, if a first repetition is associated with SSB0, on the UE and the network, an n^{th} repetition is associated with SSBx, *x* = (*n* - 1) *mod N.*

*x* herein is an index of an associated SSB, and *N* is a quantity of SSBs that are actually sent.

In embodiments of this application, the network-side device sends the first configuration information of the Msg1 repeated-transmission to the terminal, for the terminal to determine the first time-frequency resource for the Msg1 repeated-transmission, to implement the Msg1 repeated-transmission, thereby improving coverage performance of a PRACH.

Optionally, the sending, by a network-side device, a first message to a terminal, where the first message carries first configuration information of Msg1 repeated-transmission, includes:
sending, by the network-side device, the first message to the terminal, where the first message carries the first configuration information indicating execution of the Msg1 repeated-transmission in a contention-free random access procedure.

It may be understood that the network-side device sends the first message to the terminal, where the first message carries the first configuration information indicating execution of the Msg1 repeated-transmission in a contention-free random access procedure, to enable the terminal to determine the first time-frequency resource for the Msg1 repeated-transmission based on the first configuration information.

Optionally, the first configuration information includes at least one of the following:
a) Random access type.

Optionally, the random access type includes at least one of the following:
a 4-step random access procedure of Msg1 single-transmission and Msg3 single-transmission;
a 4-step random access procedure of Msg1 single-transmission and Msg3 repeated-transmission;
a 4-step random access procedure of Msg1 repeated-transmission and Msg3 single-transmission; and
a 4-step random access procedure of Msg1 repeated-transmission and Msg3 repeated-transmission.

Specifically, the A-bits field is defined for indication, where A may be 2. Alternatively, the RACH type may be determined based on a correspondence of a preamble index indicated by DCI within a preamble index range of different RACH types.

It may be determined, based on a random access type, whether to perform the Msg1 repeated-transmission.

b) Msg1 repeated-transmission pattern.

Optionally, the Msg1 repeated-transmission pattern includes:
an Msg1 repeated-transmission pattern of associating with a same SSB, or an Msg1 repeated-transmission pattern of associating with a plurality of SSBs.

c) Msg1 repeated-transmission count.

d) Whether to enable RO frequency hopping.

Whether to enable RO frequency hopping indicates whether the Msg1 repeated-transmission supports frequency hopping. Alternatively, it is determined according to configuration of the system message by default whether to enable RO frequency hopping.

e) RO frequency hopping offset.

Optionally, the first configuration information indicates a RO frequency hopping offset RO offset of the Msg1 repeated-transmission.

Alternatively, the RO offset is determined according to a rule predefined in the protocol or configuration of the system message.

f) RO set.

Optionally, a RO configuration set, for example, a RO set on a NUL carrier, or a RO set on a NUL carrier, or 2-step RO set, or a RO set for a 4-step RACH with Msg3 repetition, or a RO set specifically configured for Msg1 repeated-transmission, is indicated by a field.

Optionally, the first configuration message may further include a RO for the second and subsequent Msg1 transmissions in the Msg1 repeated-transmission.

It may be understood that, the network-side device may independently configure the RO for the second and subsequent repetitions by carrying, in the first configuration information, the RO for the second and subsequent Msg1 transmissions in the Msg1 repeated-transmission.

In this embodiment of this application, the network-side device sends, to the terminal, the first configuration information that indicates the Msg1 repeated-transmission in the contention-free random access procedure, for the terminal to determine the first time-frequency resource for the Msg1 repeated-transmission in the contention-free random access procedure based on the first configuration information, to implement Msg1 repeated-transmission in the contention-free random access procedure, thereby improving coverage performance of a PRACH.

The method for determining a time-frequency resource for Msg1 repeated-transmission provided in embodiments of this application may be performed by an apparatus for determining a time-frequency resource for Msg1 repeated-transmission. In embodiments of this application, the apparatus for determining a time-frequency resource for Msg1 repeated-transmission provided in embodiments of this application is described using an example in which the method for determining a time-frequency resource for Msg1 repeated-transmission is performed by the apparatus for determining a time-frequency resource for Msg1 repeated-transmission.

FIG. 8 is a schematic structural diagram 1 of an apparatus for determining a time-frequency resource for Msg1 repeated-transmission according to an embodiment of this application. As shown in FIG. 8, an apparatus 800 for determining a time-frequency resource for Msg1 repeated-transmission includes:
a first receiving unit 810, configured to receive a first message sent by a network-side device, where the first message carries first configuration information of Msg1 repeated-transmission; and
a first determining unit 820, configured to determine a first time-frequency resource for the Msg1 repeated-transmission based on the first configuration information, where
the determining a first time-frequency resource for the Msg1 repeated-transmission includes at least one of the following:
   determining whether to perform the Msg1 repeated-transmission;
   determining a physical random access channel PRACH resource for the Msg1 repeated-transmission; and
   determining a frequency hopping parameter of the Msg 1 repeated-transmission.

Optionally, the first configuration information includes at least one of the following:
an Msg1 repeated-transmission pattern;
a plurality of types of SSB combinations;
a configuration parameter of an SSB-RO association;
a first threshold, indicating a trigger threshold for the Msg1 repeated-transmission;
a second threshold, indicating a selection threshold for an associated SSB of the Msg1 repeated-transmission;
whether to enable RO frequency hopping;
a RO frequency hopping offset;
a frequency hopping count or a frequency hopping step size;
an Msg1 repeated-transmission count;
a preamble resource set for the Msg1 repeated-transmission; and
a RO mask of the Msg1 repeated-transmission.

Optionally, the Msg1 repeated-transmission pattern includes:
a plurality of ROs are associated with a same SSB; or
a plurality of ROs are associated with different SSBs.

Optionally, the determining whether to perform the Msg1 repeated-transmission and determining a physical random access channel PRACH resource for the Msg1 repeated-transmission includes:
determining, in a case that a first condition is met, to perform the Msg1 repeated-transmission, and determining the PRACH resource for the Msg1 repeated-transmission.

The first condition includes at least one of the following:
that 4-step random access fails N times, and a value of N is predefined in a protocol or configured by the first message;
that first signaling is received, where the first signaling instructs the terminal to perform the Msg1 repeated-transmission, and carries indication information related to RO frequency hopping; and
that signal quality of a downlink signal is lower than or not higher than the first threshold, where
that the first threshold is configured by the first message, or a threshold for determining whether to perform a random access procedure of Msg3 repeated-transmission is reused as the first threshold.

Optionally, that the 4-step random access fails N times includes:
in a 4-step random access procedure, the terminal tries to perform Msg1 single-transmission N times and does not receive corresponding Msg2; or
in a 4-step random access procedure, the terminal tries to perform Msg1 single-transmission N times and receives corresponding Msg2, but fails to transmit Msg3, where
the value of N is predefined in the protocol or configured by the first message.

Optionally, the first signaling includes DCI or a MAC CE or RRC signaling.

Optionally, the determining a PRACH resource for the Msg1 repeated-transmission includes:
determining, based on the Msg1 repeated-transmission pattern and the second threshold, an SSB or an SSB combination associated with the Msg1 repeated-transmission;
determining, based on an association between the SSB/SSB combination associated with the Msg1 repeated-transmission and a RO, a candidate RO set of the PRACH resource for the Msg1 repeated-transmission; and
determining a RO corresponding to each Msg1 transmission in the Msg1 repeated-transmission, where
the second threshold is configured by the first message, or a threshold for selecting an associated SSB in a random access procedure of Msg3 repeated-transmission is reused as the second threshold.

Optionally, the determining, based on the Msg1 repeated-transmission pattern and the second threshold, an SSB associated with the Msg1 repeated-transmission includes:
for the Msg1 repeated-transmission pattern in which a plurality of ROs are associated with a same SSB, comparing, by the terminal, signal quality of all detected SSBs with the second threshold, to select an SSB with signal quality higher than the second threshold as the SSB associated with the Msg1 repeated-transmission; or
implementing, in a case that there are a plurality of SSBs whose signal quality is higher than the second threshold, based on the terminal, or selecting randomly one of the plurality of SSBs as the SSB associated with the Msg1 repeated-transmission; or
implementing, in a case that there is no SSB whose signal quality is higher than the second threshold, based on the terminal, or selecting randomly one SSB as the SSB associated with the Msg1 repeated-transmission.

Optionally, the determining, based on the Msg1 repeated-transmission pattern and the second threshold, an SSB combination associated with the Msg1 repeated-transmission includes:
for the Msg1 repeated-transmission pattern in which a plurality of ROs are associated with different SSBs, comparing signal quality of SSB combinations with the second threshold, and selecting one of the SSB combinations as the SSB combination associated with the Msg1 repeated-transmission.

Optionally, the determining a RO corresponding to each Msg1 transmission in the Msg1 repeated-transmission includes:
determining a time domain position of the RO corresponding to the each Msg1 transmission in the Msg1 repeated-transmission; and
determining, based on the frequency hopping parameter, a frequency domain position of the RO corresponding to the each Msg1 transmission in the Msg1 repeated-transmission.

Optionally, the determining a time domain position of the RO corresponding to the each Msg1 transmission in the Msg1 repeated-transmission includes:
for the Msg1 repeated-transmission pattern in which a plurality of ROs are associated with a same SSB, time domain positions of the plurality of ROs of the Msg1 repeated-transmission correspond to a plurality of consecutive SSB-RO association periods, where
an association period corresponding to first Msg1 of the Msg1 repeated-transmission is determined based on a reference time point, where the reference time point is determined based on predefinition in the protocol or configuration of the first message.

Optionally, the determining a time domain position of the RO corresponding to the each Msg1 transmission in the Msg1 repeated-transmission includes:
for the Msg1 repeated-transmission pattern in which a plurality of ROs are associated with different SSBs, time domain positions of the ROs associated with the SSBs fall within one SSB-RO association period.

Optionally, the determining, based on the frequency hopping parameter, a frequency domain position of the RO corresponding to the each Msg1 transmission in the Msg1 repeated-transmission includes:
determining a frequency domain position of a RO of a first Msg1 transmission in the Msg1 repeated-transmission according to a rule predefined in the protocol or by randomly selecting a RO from a RO set at a time domain position of the first Msg1 transmission; and
determining a frequency domain position of a RO of an i^{th} Msg1 transmission in the Msg1 repeated-transmission based in a frequency domain position of a RO and a RO frequency hopping offset of an (i-1)^{th} Msg1 transmission in the Msg1 repeated-transmission, where
i is a positive integer greater than or is equal to 2.

Optionally, the determining a frequency hopping parameter of the Msg1 repeated-transmission includes:
determining the RO frequency hopping offset based on the configuration parameter of the SSB-RO association or the rule predefined in the protocol.

Optionally, the apparatus further includes:
a second determining unit, configured to determine, in a case that the first configuration information further includes a RO for second and subsequent Msg1 transmissions in the Msg1 repeated-transmission, that the network-side device supports the Msg1 repeated-transmission.

Optionally, the Msg1 repeated-transmission pattern includes:
the RO for the second and subsequent Msg1 transmissions in the Msg1 repeated-transmission and a RO for a first Msg1 transmission in the Msg1 repeated-transmission are associated with a same SSB; and
the RO for the second and subsequent Msg1 transmissions in the Msg1 repeated-transmission and a RO for a first Msg1 transmission in the Msg1 repeated-transmission are associated with one or more different SSBs.

Optionally, in a case that the RO for the second and subsequent Msg1 transmissions in the Msg1 repeated-transmission and the RO for the first Msg1 transmission in the Msg1 repeated-transmission are associated with one or more different SSBs, the first message further carries a plurality of SSB combinations.

Optionally, the apparatus further includes:
a third determining unit, configured to determine, in a case that a plurality of ROs are configured in a frequency domain, that the Msg1 repeated-transmission supports frequency hopping.

Optionally, the apparatus further includes:
a fourth determining unit, configured to determine the Msg1 repeated-transmission count based on a quantity of ROs for the second and subsequent Msg1 transmissions in the Msg1 repeated-transmission in the first configuration information.

Optionally, the apparatus further includes:
a fifth determining unit, configured to determine, based on an SSB pattern configured or predetermined by the network-side device, an SSB associated with the second and subsequent Msg1 transmissions in the Msg1 repeated-transmission.

Optionally, the first receiving unit is further configured to:
receive the first message, where the first message carries the first configuration information indicating execution of the Msg1 repeated-transmission in a contention-free random access procedure.

Optionally, the first configuration information includes at least one of the following:
a random access type;
an Msg1 repeated-transmission pattern;
an Msg1 repeated-transmission count;
whether to enable RO frequency hopping;
a RO frequency hopping offset; and
a RO set.

Optionally, the random access type includes at least one of the following:
a 4-step random access procedure of Msg1 single-transmission and Msg3 single-transmission;
a 4-step random access procedure of Msg1 single-transmission and Msg3 repeated-transmission;
a 4-step random access procedure of Msg1 repeated-transmission and Msg3 single-transmission; and
a 4-step random access procedure of Msg1 repeated-transmission and Msg3 repeated-transmission.

Optionally, the first message includes at least one of the following: a system message, DCI, a MAC CE, and RRC signaling.

The apparatus for determining a time-frequency resource for Msg1 repeated-transmission in this application may be an electronic device, for example, an electronic device having operating system, or may be a part in an electronic device, for example, an integrated circuit or a chip. The electronic device may be a terminal or another device other than terminal. For example, the terminal may include, but not limited to, types of the terminal 11 listed above, and the another device may be a server, a network attached storage (Network Attached Storage, NAS), or the like, which is not specifically limited in this embodiment of this application.

The apparatus for determining a time-frequency resource for Msg1 repeated-transmission provided in this embodiment of this application may implement processes implemented in the method embodiments of FIG. 2 to FIG. 6, and achieve the same beneficial effects. To avoid repetition, details are not described herein again.

FIG. 9 is a schematic structural diagram 2 of an apparatus for determining a time-frequency resource for Msg1 repeated-transmission according to an embodiment of this application. As shown in FIG. 9, an apparatus 900 for determining a time-frequency resource for Msg1 repeated-transmission includes:
a first sending unit 910, configured to send a first message to a terminal, where the first message carries first configuration information of Msg1 repeated-transmission.

Optionally, the first configuration information includes at least one of the following:
an Msg1 repeated-transmission pattern;
a plurality of types of SSB combinations;
a configuration parameter of an SSB-RO association;
a first threshold, indicating a trigger threshold for the Msg1 repeated-transmission;
a second threshold, indicating a selection threshold for an associated SSB of the Msg1 repeated-transmission;
whether to enable RO frequency hopping;
a RO frequency hopping offset;
a frequency hopping count or a frequency hopping step size;
an Msg1 repeated-transmission count;
a preamble resource set for the Msg1 repeated-transmission; and
a RO mask of the Msg1 repeated-transmission.

Optionally, the apparatus further includes:
a second sending unit, configured to send first signaling to the terminal, where the first signaling instructs the terminal to perform the Msg1 repeated-transmission, and carries indication information related to RO frequency hopping.

Optionally, the first signaling includes DCI or a MAC CE or RRC signaling.

Optionally, the first configuration information further includes a RO for the second and subsequent Msg1 transmissions in the Msg1 repeated-transmission.

Optionally, the apparatus further includes:
a third sending unit, configured to send the SSB pattern, where the SSB pattern is provided for the terminal to determine an SSB associated with the second and subsequent Msg1 transmissions in the Msg1 repeated-transmission.

Optionally, the first sending unit is configured to:
send the first message to the terminal, where the first message carries the first configuration information indicating execution of the Msg1 repeated-transmission in a contention-free random access procedure.

Optionally, the first configuration information includes at least one of the following:
a random access type;
an Msg1 repeated-transmission pattern;
an Msg1 repeated-transmission count;
whether to enable RO frequency hopping;
a RO frequency hopping offset; and
a RO set.

Optionally, the random access type includes at least one of the following:
a 4-step random access procedure of Msg1 single-transmission and Msg3 single-transmission;
a 4-step random access procedure of Msg1 single-transmission and Msg3 repeated-transmission;
a 4-step random access procedure of Msg1 repeated-transmission and Msg3 single-transmission; and
a 4-step random access procedure of Msg1 repeated-transmission and Msg3 repeated-transmission.

Optionally, the first message includes at least one of the following: a system message, DCI, a MAC CE, and RRC signaling.

The apparatus for determining a time-frequency resource for Msg1 repeated-transmission provided in this embodiment of this application may implement processes implemented in the method embodiment of FIG. 7, and achieve the same beneficial effects. To avoid repetition, details are not described herein again.

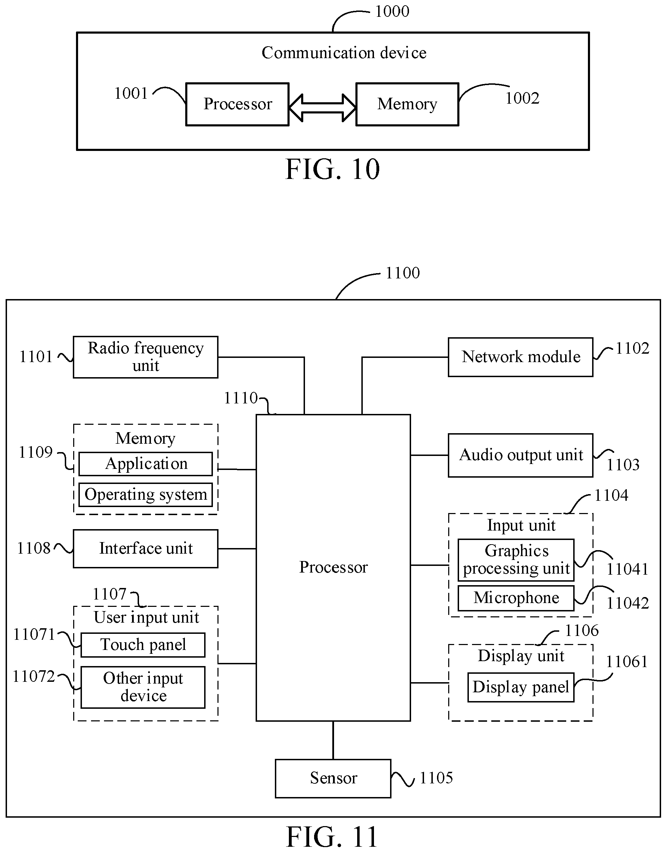

Optionally, as shown in FIG. 10, an embodiment of this application further provides a communication device 1000, including a processor 1001 and a memory 1002. The memory 1002 has a program or instructions executable by the processor 1001 stored therein. For example, when the communication device 1000 is a terminal, the program or instructions, when executed by the processor 1001, implement the steps of the foregoing embodiments of the method for determining a time-frequency resource for Msg1 repeated-transmission, and can achieve the same technical effects. In a case that the communication device 1000 is a network-side device, the program or instructions, when executed by the processor 1001, implement the steps of the foregoing embodiment of the method for determining a time-frequency resource for Msg1 repeated-transmission and can achieve the same technical effects. To avoid repetition, details are not described herein again.

An embodiment of this application further provides a terminal, including a processor and a communication interface. The communication interface is configured to receive a first message sent by a network-side device. The first message carries first configuration information of Msg1 repeated-transmission. The processor is configured to determine a first time-frequency resource for the Msg1 repeated-transmission based on the first configuration information. The determining a first time-frequency resource for the Msg1 repeated-transmission includes at least one of the following: determining whether to perform the Msg1 repeated-transmission; determining a physical random access channel PRACH resource for the Msg1 repeated-transmission; and determining a frequency hopping parameter of the Msg1 repeated-transmission; and determining a RO corresponding to each Msg1 transmission in the Msg1 repeated-transmission.

The embodiments of the terminal correspond to the method embodiments on the side of the terminal. All implementation processes and implementations of the foregoing method embodiments are applicable to the embodiments of the terminal and can achieve same technical effects.

Specifically, FIG. 11 is a schematic diagram of a hardware structure of a terminal implementing an embodiment of this application.

A terminal 1100 includes, but is not limited to, at least some components in a radio frequency unit 1101, a network module 1102, an audio output unit 1103, an input unit 1104, a sensor 1105, a display unit 1106, a user input unit 1107, an interface unit 1108, a memory 1109, a processor 1110, and the like.

A person skilled in the art may understand that the terminal 1100 may further include a power supply (such as a battery) for supplying power to the components. The power supply may be logically connected to the processor 1110 by a power supply management system, thereby implementing functions, such as charging, discharging, and power consumption management, by using the power supply management system. A terminal structure shown in FIG. 11 does not constitute a limitation to the terminal, and the terminal may include more or fewer components than those shown in the figure, or some components may be combined, or a different component deployment may be used. Details are not described herein again.

It should be understood that, in embodiments of this application, the input unit 1104 may include a graphics processing unit (Graphics Processing Unit, GPU) 11041 and a microphone 11042. The graphics processing unit 11041 processes image data of a static picture or a video obtained by an image capturing apparatus (for example, a camera) in a video capturing mode or an image capturing mode. The display unit 1106 may include a display panel 11061, and the display panel 11061 may be configured in a form such as a liquid crystal display or an organic light-emitting diode. The user input unit 1107 includes at least one of a touch panel 11071 and another input device 11072. The touch panel 11071 is also referred to as a touchscreen. The touch panel 11071 may include two parts: a touch monitoring apparatus and a touch controller. The another input device 11072 may include, but not limited to, a physical keyboard, a functional key (such as a volume control key or a switch key), a track ball, a mouse, and a joystick, which is not described herein in detail.

In this embodiment of this application, after being received by the radio frequency unit 1101, downlink data from the network-side device may be transmitted to the processor 1110 for processing. In addition, the radio frequency unit 1101 may send uplink data to the network-side device. Generally, the radio frequency unit 1101 includes, but is not limited to, an antenna, an amplifier, a transceiver, a coupler, a low noise amplifier, a duplexer, and the like.

The memory 1109 may be configured to store a software program or instructions and various data. The memory 1109 may mainly include a first storage region having a program or instructions stored therein and a second storage region having data stored therein. The first storage region may store an operating system, an application or instructions required by at least one function (for example, a sound playback function or an image playback function), and the like. In addition, the memory 1109 may include a volatile memory or a non-volatile memory, or the memory 1109 may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synch Link DRAM, SLDRAM), and a direct rambus dynamic random access memory (Direct Rambus RAM, DR RAM). The memory 1109 in this embodiment of this application aims to include, but not limited to, these memories and any other suitable types of memories.

The processor 1110 may include one or more processing units. Optionally, the processor 1110 may integrate an application processor and a modem. The application processor mainly processes operations on an operating system, a user interface, an application, and the like. The modem processor mainly processes wireless communication signals, for example, a baseband processor. It may be understood that the modulation and demodulation processor may not be integrated into the processor 1110.

The radio frequency unit 1101 is configured to receive a first message sent by a network-side device, where the first message carries first configuration information of Msg1 repeated-transmission.

The processor 1110 is configured to determine a first time-frequency resource for the Msg1 repeated-transmission based on the first configuration information. The determining a first time-frequency resource for the Msg1 repeated-transmission includes at least one of the following: determining whether to perform the Msg1 repeated-transmission; determining a physical random access channel PRACH resource for the Msg1 repeated-transmission; and determining a frequency hopping parameter of the Msg1 repeated-transmission.

In embodiments of this application, the terminal determines the first time-frequency resource for the Msg1 repeated-transmission based on the first configuration information of the Msg1 repeated-transmission sent by the network-side device, to implement the Msg1 repeated-transmission, thereby improving coverage performance of a PRACH.

Optionally, the first configuration information includes at least one of the following:
an Msg1 repeated-transmission pattern;
a plurality of types of SSB combinations;
a configuration parameter of an SSB-RO association;
a first threshold, indicating a trigger threshold for the Msg1 repeated-transmission;
a second threshold, indicating a selection threshold for an associated SSB of the Msg1 repeated-transmission;
whether to enable RO frequency hopping;
a RO frequency hopping offset;
a frequency hopping count or a frequency hopping step size;
an Msg1 repeated-transmission count;
a preamble resource set for the Msg1 repeated-transmission; and
a RO mask of the Msg1 repeated-transmission.

Optionally, the Msg1 repeated-transmission pattern includes:
a plurality of ROs are associated with a same SSB; or
a plurality of ROs are associated with different SSBs.

Optionally, the processor 1110 is configured to:
determine, in a case that a first condition is met, to perform the Msg1 repeated-transmission, and determining the PRACH resource for the Msg1 repeated-transmission.

The first condition includes at least one of the following:
that 4-step random access fails N times, and a value of N is predefined in a protocol or configured by the first message;
that first signaling is received, where the first signaling instructs the terminal to perform the Msg1 repeated-transmission, and carries indication information related to RO frequency hopping; and
that signal quality of a downlink signal is lower than or not higher than the first threshold, where
that the first threshold is configured by the first message, or a threshold for determining whether to perform a random access procedure of Msg3 repeated-transmission is reused as the first threshold.

Optionally, that the 4-step random access fails N times includes:
in a 4-step random access procedure, the terminal tries to perform Msg1 single-transmission N times and does not receive corresponding Msg2; or
in a 4-step random access procedure, the terminal tries to perform Msg1 single-transmission N times and receives corresponding Msg2, but fails to transmit Msg3, where
the value of N is predefined in the protocol or configured by the first message.

Optionally, the first signaling includes DCI or a MAC CE or RRC signaling.

Optionally, the determining a PRACH resource for the Msg1 repeated-transmission includes:
determining, based on the Msg1 repeated-transmission pattern and the second threshold, an SSB or an SSB combination associated with the Msg1 repeated-transmission;
determining, based on an association between the SSB/SSB combination associated with the Msg1 repeated-transmission and a RO, a candidate RO set of the PRACH resource for the Msg1 repeated-transmission; and
determining a RO corresponding to each Msg1 transmission in the Msg1 repeated-transmission, where
the second threshold is configured by the first message, or a threshold for selecting an associated SSB in a random access procedure of Msg3 repeated-transmission is reused as the second threshold.

Optionally, the determining, based on the Msg1 repeated-transmission pattern and the second threshold, an SSB associated with the Msg1 repeated-transmission includes:
for the Msg1 repeated-transmission pattern in which a plurality of ROs are associated with a same SSB, comparing, by the terminal, signal quality of all detected SSBs with the second threshold, to select an SSB with signal quality higher than the second threshold as the SSB associated with the Msg1 repeated-transmission; or
implementing, in a case that there are a plurality of SSBs whose signal quality is higher than the second threshold, based on the terminal, or selecting randomly one of the plurality of SSBs as the SSB associated with the Msg1 repeated-transmission; or
implementing, in a case that there is no SSB whose signal quality is higher than the second threshold, based on the terminal, or selecting randomly one SSB as the SSB associated with the Msg1 repeated-transmission.

Optionally, the determining, based on the Msg1 repeated-transmission pattern and the second threshold, an SSB combination associated with the Msg1 repeated-transmission includes:
for the Msg1 repeated-transmission pattern in which a plurality of ROs are associated with different SSBs, comparing signal quality of SSB combinations with the second threshold, and selecting one of the SSB combinations as the SSB combination associated with the Msg1 repeated-transmission.

Optionally, the determining a RO corresponding to each Msg1 transmission in the Msg1 repeated-transmission includes:
determining a time domain position of the RO corresponding to the each Msg1 transmission in the Msg1 repeated-transmission; and
determining, based on the frequency hopping parameter, a frequency domain position of the RO corresponding to the each Msg1 transmission in the Msg1 repeated-transmission.

Optionally, the determining a time domain position of the RO corresponding to the each Msg1 transmission in the Msg1 repeated-transmission includes:
for the Msg1 repeated-transmission pattern in which a plurality of ROs are associated with a same SSB, time domain positions of the plurality of ROs of the Msg1 repeated-transmission correspond to a plurality of consecutive SSB-RO association periods, where
an association period corresponding to first Msg1 of the Msg1 repeated-transmission is determined based on a reference time point, where the reference time point is determined based on predefinition in the protocol or configuration of the first message.

Optionally, the determining a time domain position of the RO corresponding to the each Msg1 transmission in the Msg1 repeated-transmission includes:
for the Msg1 repeated-transmission pattern in which a plurality of ROs are associated with different SSBs, time domain positions of the ROs associated with the SSBs fall within one SSB-RO association period.

Optionally, the determining, based on the frequency hopping parameter, a frequency domain position of the RO corresponding to the each Msg1 transmission in the Msg1 repeated-transmission includes:
determining a frequency domain position of a RO of a first Msg1 transmission in the Msg1 repeated-transmission according to a rule predefined in the protocol or by randomly selecting a RO from a RO set at a time domain position of the first Msg1 transmission; and
determining a frequency domain position of a RO of an i^{th} Msg1 transmission in the Msg1 repeated-transmission based in a frequency domain position of a RO and a RO frequency hopping offset of an (i-1)^{th} Msg1 transmission in the Msg1 repeated-transmission, where
i is a positive integer greater than or is equal to 2.

Optionally, the determining a frequency hopping parameter of the Msg1 repeated-transmission includes:
determining the RO frequency hopping offset based on the configuration parameter of the SSB-RO association or the rule predefined in the protocol.

Optionally, the processor 1110 is further configured to:
determine, in a case that the first configuration information further includes a RO for second and subsequent Msg1 transmissions in the Msg1 repeated-transmission, that the network-side device supports the Msg1 repeated-transmission.

Optionally, the Msg1 repeated-transmission pattern includes:
the RO for the second and subsequent Msg1 transmissions in the Msg1 repeated-transmission and a RO for a first Msg1 transmission in the Msg1 repeated-transmission are associated with a same SSB; and
the RO for the second and subsequent Msg1 transmissions in the Msg1 repeated-transmission and a RO for a first Msg1 transmission in the Msg1 repeated-transmission are associated with one or more different SSBs.

Optionally, in a case that the RO for the second and subsequent Msg1 transmissions in the Msg1 repeated-transmission and the RO for the first Msg1 transmission in the Msg1 repeated-transmission are associated with one or more different SSBs, the first message further carries a plurality of SSB combinations.

Optionally, the processor 1110 is further configured to determine, in a case that a plurality of ROs are configured in a frequency domain, that the Msg1 repeated-transmission supports frequency hopping.

Optionally, the processor 1110 is further configured to determine the Msg1 repeated-transmission count based on a quantity of ROs for the second and subsequent Msg1 transmissions in the Msg1 repeated-transmission in the first configuration information.

Optionally, the processor 1110 is further configured to determine, based on an SSB pattern configured or predetermined by the network-side device, an SSB associated with the second and subsequent Msg1 transmissions in the Msg1 repeated-transmission.

Optionally, the radio frequency unit 1101 is configured to:
receive the first message, where the first message carries the first configuration information indicating execution of the Msg1 repeated-transmission in a contention-free random access procedure.

Optionally, the first configuration information includes at least one of the following:
a random access type;
an Msg1 repeated-transmission pattern;
an Msg1 repeated-transmission count;
whether to enable RO frequency hopping;
a RO frequency hopping offset; and
a RO set.

Optionally, the random access type includes at least one of the following:
a 4-step random access procedure of Msg1 single-transmission and Msg3 single-transmission;
a 4-step random access procedure of Msg1 single-transmission and Msg3 repeated-transmission;
a 4-step random access procedure of Msg1 repeated-transmission and Msg3 single-transmission; and
a 4-step random access procedure of Msg1 repeated-transmission and Msg3 repeated-transmission.

Optionally, the first message includes at least one of the following: a system message, DCI, a MAC CE, and RRC signaling.

In embodiments of this application, the terminal determines the first time-frequency resource for the Msg1 repeated-transmission based on the first configuration information of the Msg1 repeated-transmission sent by the network-side device, and obtains a frequency diversity gain by selecting ROs with different frequency positions, which may also avoid resources used by different Msg1 repetitions from completely overlapping with each other on the time-frequency resource. In this way, the coverage performance of the Msg1 repeated-transmission can be improved, and the complexity of PRACH resource allocation can be reduced.

An embodiment of this application further provides a network-side device, including a processor and a communication interface. The communication interface is configured to send a first message to a terminal. The first message carries first configuration information of Msg1 repeated-transmission.

The embodiment of the network-side device corresponds to the method embodiment on the network-side device. All implementation processes and implementations of the foregoing method embodiment are applicable to the embodiment of the network-side device and can achieve same technical effects.

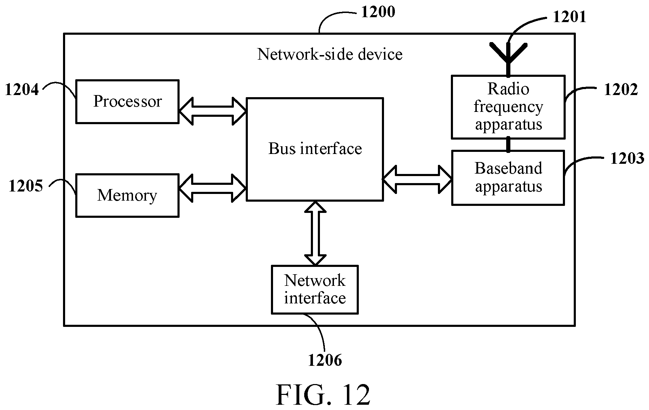

Specifically, embodiments of this application further provide a network-side device. As shown in FIG. 12, the network-side device 1200 includes an antenna 1201, a radio frequency apparatus 1202, a baseband apparatus 1203, a processor 1204, and a memory 1205. The antenna 1201 is connected to the radio frequency apparatus 1202. In an uplink direction, the radio frequency apparatus 1202 receives, by using the antenna 1201, information, and sends the received information to the baseband apparatus 1203 for processing. In a downlink direction, the baseband apparatus 1203 processes to-be-sent information, and sends the information to the radio frequency apparatus 1202. The radio frequency apparatus 1202 processes the received information and then sends the information by using the antenna 1201.

The method performed by the network-side device in the foregoing embodiments can be implemented in the baseband apparatus 1203. The baseband apparatus 1203 includes a baseband processor.

The baseband apparatus 1203 may include, for example, at least one baseband plate. A plurality of chips are arranged on the baseband plate. As shown in FIG. 12, one of the plurality of chips is, for example, the baseband processor, and is connected to the memory 1205 by the bus interface, to invoke a program in the memory 1205 to perform operations of the network device in the foregoing method embodiments.

The network-side device may further include a network interface 1202. The interface is, for example, a common public radio interface (common public radio interface, CPRI).

Specifically, the network-side device 1200 provided in this embodiment of the present invention further includes instructions or a program stored in the memory 1205 and executable by the processor 1204. The processor 1204 calls the instructions or program in the memory 1205 to execute the method performed by the modules shown in FIG. 9 and produce the same technical effects. To avoid repetition, details are not described herein again.

An embodiment of this application further provides a readable storage medium. The readable storage medium has a program or instructions store therein. The program or instructions, when executed by a processor, implement the processes of the foregoing embodiments of the method for determining a time-frequency resource for Msg1 repeated-transmission and can achieve the same technical effects. To avoid repetition, details are not described herein again.

The processor is a processor in the terminal in the foregoing embodiments. The readable storage medium includes a computer-readable storage medium such as a computer read-only memory ROM, a random access memory RAM, a magnetic disk, or an optical disc.

An embodiment of this application further provides a chip, including a processor and a communication interface. The communication interface is coupled to the processor, and the processor is configured to execute a program or instructions, to implement processes of the embodiments of the method for determining a time-frequency resource for Msg1 repeated-transmission, and can achieve the same technical effects. To avoid repetition, details are not described herein again.

It should be noted that, the chip mentioned in embodiments of this application may also be referred to as a system-level chip, a system chip, a chip system, a system on chip, or the like.

An embodiment of this application further provides a computer program/program product. The computer program/program product is stored in a storage medium. The computer program/program product is executed by at least one processor to implement the processes of the embodiments of the method for determining a time-frequency resource for Msg1 repeated-transmission, and can achieve the same technical effects. To avoid repetition, details are not described herein again.

An embodiment of this application further provides a system for determining a time-frequency resource for Msg1 repeated-transmission is provided, including a terminal and a network-side device. The terminal may be configured to perform the steps of the method for determining a time-frequency resource for Msg1 repeated-transmission described above. The network-side device may be configured to perform the steps of the method for determining a time-frequency resource for Msg1 repeated-transmission described above.

It should be noted that terms "include", "comprise", and any variants thereof are intended to cover a non-exclusive inclusion. Therefore, in the context of a process, method, object, or apparatus that includes a series of elements, the process, method, object, or apparatus not only includes such elements, but also includes other elements not specified expressly, or may include inherent elements of the process, method, object, or device. Without more limitations, elements defined by a sentence "including one" does not exclude that there are still other same elements in the process, method, object, or apparatus. Besides, it should be noted that ranges of the method and apparatus in the implementations of this application are not limited to implementing functions in an order shown or discussed, but may include implementing functions according to the included functions in a substantially simultaneous manner or in a reverse order, for example, the described method may be performed in an order different than the described order. In addition, various steps may also be added, omitted, or combined. In addition, features described with reference to some examples may also be combined in other examples.

Through the descriptions of the foregoing implementations, a person skilled in the art may clearly understand that the method according to the foregoing embodiments may be implemented through software and a necessary general hardware platform, and certainly, may also be implemented by hardware, but in many cases, the former manner is a better implementation. Based on such an understanding, the technical solutions of this application essentially, or the part contributing to the related art, may be presented in the form of a computer software product. The computer software product is stored in a storage medium (for example, a ROM/RAM, a magnetic disk, or an optical disc) including several instructions to enable a terminal (which may be a mobile phone, a computer, a server, an air conditioner, a network device, or the like) to perform the methods described in embodiments of this application.

Although embodiments of this application have been described above with reference to the accompanying drawings, this application is not limited to the specific implementations described above, and the specific implementations described above are merely exemplary and not limitative. A person of ordinary skill in the art may make various variations under the teaching of this application without departing from the spirit of this application and the protection scope of the claims, and such variations shall all fall within the protection scope of this application.

## Claims

1. A method for determining a time-frequency resource for Msg1 repeated-transmission, comprising:
receiving, by a terminal, a first message sent by a network-side device, wherein the first message carries first configuration information of Msg1 repeated-transmission; and
determining, by the terminal, a first time-frequency resource for the Msg1 repeated-transmission based on the first configuration information, wherein
the determining a first time-frequency resource for the Msg1 repeated-transmission comprises at least one of the following:
determining whether to perform the Msg1 repeated-transmission;
determining a physical random access channel PRACH resource for the Msg1 repeated-transmission; and
determining a frequency hopping parameter of the Msg 1 repeated-transmission.

2. The method for determining a time-frequency resource for Msg1 repeated-transmission according to claim 1, wherein the first configuration information comprises at least one of the following:
an Msg1 repeated-transmission pattern;
a plurality of types of synchronization signal block SSB combinations;
a configuration parameter of an SSB-random access channel transmission occasion RO association;
a first threshold, indicating a trigger threshold for the Msg1 repeated-transmission;
a second threshold, indicating a selection threshold for an associated SSB of the Msg1 repeated-transmission;
whether to enable RO frequency hopping;
a RO frequency hopping offset;
a frequency hopping count or a frequency hopping step size;
an Msg1 repeated-transmission count;
a pilot sequence resource set for the Msg1 repeated-transmission; and
a RO mask of the Msg1 repeated-transmission.

3. The method for determining a time-frequency resource for Msg1 repeated-transmission according to claim 2, wherein the Msg1 repeated-transmission pattern comprises:
a plurality of ROs are associated with a same SSB; or
a plurality of ROs are associated with different SSBs.

4. The method for determining a time-frequency resource for Msg1 repeated-transmission according to any one of claims 1 to 3, the determining whether to perform the Msg1 repeated-transmission and determining a physical random access channel PRACH resource for the Msg1 repeated-transmission comprises:
determining, in a case that a first condition is met, to perform the Msg1 repeated-transmission, and determining the PRACH resource for the Msg1 repeated-transmission, wherein
the first condition comprises at least one of the following:
that 4-step random access fails N times, wherein a value of N is predefined in a protocol or configured by the first message;
that first signaling is received, wherein the first signaling instructs the terminal to perform the Msg1 repeated-transmission, and carries indication information related to RO frequency hopping; and
that signal quality of a downlink signal is lower than or not higher than the first threshold, wherein
the first threshold is configured by the first message, or a threshold for determining whether to perform a random access procedure of Msg3 repeated-transmission is reused as the first threshold.

5. The method for determining a time-frequency resource for Msg1 repeated-transmission according to claim 4, wherein that the 4-step random access fails N times comprises:
in a 4-step random access procedure, the terminal tries to perform Msg1 single-transmission N times and does not receive corresponding Msg2; or
in a 4-step random access procedure, the terminal tries to perform Msg1 single-transmission N times and receives corresponding Msg2, but fails to transmit Msg3, wherein
the value of N is predefined in the protocol or configured by the first message.

6. The method for determining a time-frequency resource for Msg1 repeated-transmission according to claim 4, wherein the first signaling comprises downlink control information DCI or a Media Access Control layer control element MAC CE or Radio Resource Control RRC signaling.

7. The method for determining a time-frequency resource for Msg1 repeated-transmission according to claim 2, the determining a PRACH resource for the Msg1 repeated-transmission comprises:
determining, based on the Msg1 repeated-transmission pattern and the second threshold, an SSB or an SSB combination associated with the Msg1 repeated-transmission;
determining, based on an association between the SSB/SSB combination associated with the Msg1 repeated-transmission and a RO, a candidate RO set of the PRACH resource for the Msg1 repeated-transmission; and
determining a RO corresponding to each Msg1 transmission in the Msg1 repeated-transmission, wherein
the second threshold is configured by the first message, or a threshold for selecting an associated SSB in a random access procedure of Msg3 repeated-transmission is reused as the second threshold.

8. The method for determining a time-frequency resource for Msg1 repeated-transmission according to claim 7, wherein the determining, based on the Msg1 repeated-transmission pattern and the second threshold, an SSB associated with the Msg1 repeated-transmission comprises:
for the Msg1 repeated-transmission pattern in which a plurality of ROs are associated with a same SSB, comparing, by the terminal, signal quality of all detected SSBs with the second threshold, to select an SSB with signal quality higher than the second threshold as the SSB associated with the Msg1 repeated-transmission; or
implementing, in a case that there are a plurality of SSBs with signal quality higher than the second threshold, based on the terminal, or selecting randomly one of the plurality of SSBs as the SSB associated with the Msg1 repeated-transmission; or
implementing, in a case that there is no SSB whose signal quality is higher than the second threshold, based on the terminal, or selecting randomly one SSB as the SSB associated with the Msg1 repeated-transmission.

9. The method for determining a time-frequency resource for Msg1 repeated-transmission according to claim 7, wherein the determining, based on the Msg1 repeated-transmission pattern and the second threshold, an SSB combination associated with the Msg1 repeated-transmission comprises:
for the Msg1 repeated-transmission pattern in which a plurality of ROs are associated with different SSBs, comparing signal quality of SSB combinations with the second threshold, and selecting one of the SSB combinations as the SSB combination associated with the Msg1 repeated-transmission.

10. The method for determining a time-frequency resource for Msg1 repeated-transmission according to claim 7, wherein the determining a RO corresponding to each Msg1 transmission in the Msg1 repeated-transmission comprises:
determining a time domain position of the RO corresponding to the each Msg1 transmission in the Msg1 repeated-transmission; and
determining, based on the frequency hopping parameter, a frequency domain position of the RO corresponding to the each Msg1 transmission in the Msg1 repeated-transmission.

11. The method for determining a time-frequency resource for Msg1 repeated-transmission according to claim 10, wherein the determining a time domain position of the RO corresponding to the each Msg1 transmission in the Msg1 repeated-transmission comprises:
for the Msg1 repeated-transmission pattern in which a plurality of ROs are associated with a same SSB, time domain positions of the plurality of ROs of the Msg1 repeated-transmission correspond to a plurality of consecutive SSB-RO association periods, wherein
an association period corresponding to first Msg1 of the Msg1 repeated-transmission is determined based on a parameter time point, wherein the reference time point is determined based on predefinition in the protocol or configuration of the first message.

12. The method for determining a time-frequency resource for Msg1 repeated-transmission according to claim 10, wherein the determining a time domain position of the RO corresponding to the each Msg1 transmission in the Msg1 repeated-transmission comprises:
for the Msg1 repeated-transmission pattern in which a plurality of ROs are associated with different SSBs, time domain positions of the ROs associated with the SSBs fall within one SSB-RO association period.

13. The method for determining a time-frequency resource for Msg1 repeated-transmission according to claim 10, wherein the determining, based on the frequency hopping parameter, a frequency domain position of the RO corresponding to the each Msg1 transmission in the Msg1 repeated-transmission comprises:
determining, according to a rule predefined in the protocol or a random selection for a RO from a RO set at a time domain position of the first Msg1 transmission, a frequency domain position of a RO of a first Msg1 transmission in the Msg1 repeated-transmission; and
determining, according to a frequency domain position of a RO and a RO frequency hopping offset of an (i-1)^{th} Msg1 transmission in the Msg1 repeated-transmission, a frequency domain position of a RO of an i^{th} Msg1 transmission in the Msg1 repeated-transmission, wherein
i is a positive integer greater than or is equal to 2.

14. The method for determining a time-frequency resource for Msg1 repeated-transmission according to claim 13, the determining a frequency hopping parameter of the Msg1 repeated-transmission comprises:
determining the RO frequency hopping offset based on the configuration parameter of the SSB-RO association or the rule predefined in the protocol.

15. The method for determining a time-frequency resource for Msg1 repeated-transmission according to claim 2, wherein the method further comprises:
determining, by the terminal in a case that the first configuration information further comprises a RO for second and subsequent Msg1 transmissions in the Msg1 repeated-transmission, that the network-side device supports the Msg1 repeated-transmission.

16. The method for determining a time-frequency resource for Msg1 repeated-transmission according to claim 15, wherein the Msg1 repeated-transmission pattern comprises:
the RO for the second and subsequent Msg1 transmissions in the Msg1 repeated-transmission and a RO for a first Msg1 transmission in the Msg1 repeated-transmission are associated with a same SSB; and
the RO for the second and subsequent Msg1 transmissions in the Msg1 repeated-transmission and a RO for a first Msg1 transmission in the Msg1 repeated-transmission are associated with one or more different SSBs.

17. The method for determining a time-frequency resource for Msg1 repeated-transmission according to claim 16, wherein in a case that the RO for the second and subsequent Msg1 transmissions in the Msg1 repeated-transmission and the RO for the first Msg1 transmission in the Msg1 repeated-transmission are associated with one or more different SSBs, the first message further carries a plurality of SSB combinations.

18. The method for determining a time-frequency resource for Msg1 repeated-transmission according to claim 15, wherein the method further comprises:
determining, in a case that a plurality of ROs are configured in a frequency domain, that the Msg1 repeated-transmission supports frequency hopping.

19. The method for determining a time-frequency resource for Msg1 repeated-transmission according to claim 15, wherein the method further comprises:
determining the Msg1 repeated-transmission count based on a quantity of ROs for the second and subsequent Msg1 transmissions in the Msg1 repeated-transmission in the first configuration information.

20. The method for determining a time-frequency resource for Msg1 repeated-transmission according to claim 15, wherein the method further comprises:
determining, based on an SSB pattern configured or predetermined by the network-side device, an SSB associated with the second and subsequent Msg1 transmissions in the Msg1 repeated-transmission.

21. The method for determining a time-frequency resource for Msg1 repeated-transmission according to claim 1, wherein the receiving, by a terminal, a first message sent by a network-side device, wherein the first message carries first configuration information of Msg1 repeated-transmission, comprises:
receiving, by the terminal, the first message, wherein the first message carries the first configuration information indicating execution of the Msg1 repeated-transmission in a contention-free random access procedure.

22. The method for determining a time-frequency resource for Msg1 repeated-transmission according to claim 21, wherein the first configuration information comprises at least one of the following:
a random access type;
an Msg1 repeated-transmission pattern;
an Msg1 repeated-transmission count;
whether to enable RO frequency hopping;
a RO frequency hopping offset; and
a RO set.

23. The method for determining a time-frequency resource for Msg1 repeated-transmission according to claim 22, the random access type comprises at least one of the following:
a 4-step random access procedure of Msg1 single-transmission and Msg3 single-transmission;
a 4-step random access procedure of Msg1 single-transmission and Msg3 repeated-transmission;
a 4-step random access procedure of Msg1 repeated-transmission and Msg3 single-transmission; and
a 4-step random access procedure of Msg1 repeated-transmission and Msg3 repeated-transmission.

24. The method for determining a time-frequency resource for Msg1 repeated-transmission according to any one of claims 1 to 23, wherein the first message comprises at least one of the following: a system message, DCI, a MAC CE, and RRC signaling.

25. A method for determining a time-frequency resource for Msg1 repeated-transmission, comprising:
sending, by a network-side device, a first message to a terminal, wherein the first message carries first configuration information of Msg1 repeated-transmission.

26. The method for determining a time-frequency resource for Msg1 repeated-transmission according to claim 25, wherein the first configuration information comprises at least one of the following:
an Msg1 repeated-transmission pattern;
a plurality of types of synchronization signal block SSB combinations;
a configuration parameter of an SSB-RO association;
a first threshold, indicating a trigger threshold for the Msg1 repeated-transmission;
a second threshold, indicating a selection threshold for an associated SSB of the Msg1 repeated-transmission;
whether to enable RO frequency hopping;
a RO frequency hopping offset;
a frequency hopping count or a frequency hopping step size;
an Msg1 repeated-transmission count;
a pilot sequence resource set for the Msg1 repeated-transmission; and
a RO mask of the Msg1 repeated-transmission.

27. The method for determining a time-frequency resource for Msg1 repeated-transmission according to claim 25, wherein the method further comprises:
sending first signaling to the terminal, wherein the first signaling instructs the terminal to perform the Msg1 repeated-transmission, and carries indication information related to RO frequency hopping.

28. The method for determining a time-frequency resource for Msg1 repeated-transmission according to claim 27, wherein the first signaling comprises DCI or a MAC CE or RRC signaling.

29. The method for determining a time-frequency resource for Msg1 repeated-transmission according to claim 25, wherein the first configuration information further comprises a RO for second and subsequent Msg1 transmissions in the Msg1 repeated-transmission.

30. The method for determining a time-frequency resource for Msg1 repeated-transmission according to claim 29, wherein the method further comprises:
sending, by the terminal, the SSB pattern, wherein the SSB pattern is provided for the terminal to determine an SSB associated with the second and subsequent Msg1 transmissions in the Msg1 repeated-transmission.

31. The method for determining a time-frequency resource for Msg1 repeated-transmission according to claim 24, wherein the sending, by a network-side device, a first message to a terminal, wherein the first message carries first configuration information of Msg1 repeated-transmission, comprises:
sending, by the network-side device, the first message to the terminal, wherein the first message carries the first configuration information indicating execution of the Msg1 repeated-transmission in a contention-free random access procedure.

32. The method for determining a time-frequency resource for Msg1 repeated-transmission according to claim 31, wherein the first configuration information comprises at least one of the following:
a random access type;
an Msg1 repeated-transmission pattern;
an Msg1 repeated-transmission count;
whether to enable RO frequency hopping;
a RO frequency hopping offset; and
a RO set.

33. The method for determining a time-frequency resource for Msg1 repeated-transmission according to claim 32, the random access type comprises at least one of the following:
a 4-step random access procedure of Msg1 single-transmission and Msg3 single-transmission;
a 4-step random access procedure of Msg1 single-transmission and Msg3 repeated-transmission;
a 4-step random access procedure of Msg1 repeated-transmission and Msg3 single-transmission; and
a 4-step random access procedure of Msg1 repeated-transmission and Msg3 repeated-transmission.

34. The method for determining a time-frequency resource for Msg1 repeated-transmission according to any one of claims 25 to 33, wherein the first message comprises at least one of the following: a system message, downlink control information DCI, a Media Access Control layer control element MAC CE, and Radio Resource Control RRC signaling.

35. An apparatus for determining a time-frequency resource for Msg1 repeated-transmission, comprising:
a first receiving unit, configured to receive a first message sent by a network-side device, wherein the first message carries first configuration information of Msg1 repeated-transmission; and
a first determining unit, configured to determine a first time-frequency resource for the Msg1 repeated-transmission based on the first configuration information, wherein
the determining a first time-frequency resource for the Msg1 repeated-transmission comprises at least one of the following:
determining whether to perform the Msg1 repeated-transmission;
determining a physical random access channel PRACH resource for the Msg1 repeated-transmission; and
determining a frequency hopping parameter of the Msg1 repeated-transmission.

36. An apparatus for determining a time-frequency resource for Msg1 repeated-transmission, comprising:
a first sending unit, configured to send a first message to a terminal, wherein the first message carries first configuration information of Msg1 repeated-transmission.

37. A terminal, comprising a processor and a memory, wherein the memory has a program or instructions executable by the processor stored therein, and when executed by the processor, the program or instructions implement the steps of the method for determining a time-frequency resource for Msg1 repeated-transmission according to any one of claims 1 to 24.

38. A network-side device, comprising a processor and a memory, wherein the memory has a program or instructions executable by the processor stored therein, and when executed by the processor, the program or instructions implement the steps of the method for determining a time-frequency resource for Msg1 repeated-transmission according to any one of claims 25 to 34.

39. A readable storage medium, having a program or instructions stored therein, wherein when executed by the processor, the program or instructions implement the steps of the method for determining a time-frequency resource for Msg1 repeated-transmission according to any one of claims 1 to 24 or implement the steps of the method for determining a time-frequency resource for Msg1 repeated-transmission according to any one of claims 25 to 34.
